# EUROPEAN PATENT APPLICATION

(11) **EP 4 759 674 A1**
(43) Date of publication of application: **17.06.2026**
(21) Application number: 24854544.4
(22) Date of filing: 08.08.2024
(51) Int. Cl.: B62B 9/14, B60N 2/28, A01K 1/02, A47D 13/02

(54) **CARRIER**

(30) Priority: 11.08.2023 US 202363519165 P; 04.09.2023 CN 202311134873; 10.10.2023 CN 202311310775; 12.02.2024 US 202463552306 P; 06.08.2024 CN 202411069954
(71) Applicant: Jani International Pte. Ltd., Singapore 569874 (SG)
(72) Inventor: GUO, Zhengwen, Singapore 569874 (SG); CHEN, Yingzhong, Singapore 569874 (SG); HARTENSTINE, Curtis M, Singapore 569874 (SG); BOWERS, Patrick J G, Singapore 569874 (SG); SACK, Daniel A, Singapore 569874 (SG)
(74) Representative: Pfenning, Meinig & Partner mbB
(86) International application number: PCT/SG2024/050504
(87) International publication number: WO 2025/038030

(57) **Abstract**

Provided in the present disclosure is a carrier. The carrier comprises a box body and a ceiling assembly. The box body has an accommodating space. The ceiling assembly is pivoted to the box body or a support device arranged around the box body below the upper edge of the box body, and the ceiling assembly is placed above the box body to cover the accommodating space.

## Description

### TECHNICAL FIELD

The present disclosure relates to a carrier, more particularly, to a carrier having a canopy assembly, and a carrier comprising an engaging structure and an unlocking structure.

### BACKGROUND

In recent years, an increasing number of people use carriers, such as bassinets and carry cots, in which pets may be seated when traveling along with the pets. To facilitate the use of carriers under various weather conditions and external environments, some carriers are equipped with canopies. However, these canopies often have complex structures that are not easy to be folded, and can also hinder a user from taking the pets out of the carrier.

In the field of pets, the bassinets or carry cots are the common carriers for carrying the pets. In use, the bassinets or carry cots may be locked to devices such as bases or strollers through engaging structures to be placed, and the bassinets or carry cots may be unlocked from the bases or strollers to be transferred by the user.

Therefore, it is necessary to provide an engaging structure and a corresponding unlocking structure between the bassinet or carry cot and the base. Existing unlocking member is usually mounted on the base, which may be low in position and difficult to reach, such that the user may bend over to operate the unlocking member. Moreover, some unlocking structures are not prominently positioned, making them inconvenient for the user to find and operate. Therefore, it is necessary to provide an unlocking member that is disposed on the carry cot, particularly in a position that is easy to find and operate.

### SUMMARY

The present disclosure provides a carrier to solve at least one technical problem as above mentioned.

The present disclosure provides a carrier. The carrier comprises: a box body having an accommodating space; and a canopy assembly pivotably connected to the box body surrounding the box body, with a pivotal connection position located below an upper edge of the box body, and the canopy assembly covers above the box body to shield the accommodating space.

In an embodiment, the canopy assembly comprises: a canopy; and a canopy frame connected to the canopy to support the canopy. The canopy frame is pivotably connected to the box body to enable the canopy to be unfolded or folded relative to the box body.

In an embodiment, the canopy comprises a first canopy portion and a second canopy portion, the first canopy portion has a first edge and a second edge, wherein the first edge is an edge that is engaged with a periphery of the box body when the first canopy portion is unfolded, and the second edge is an edge that is away from the box body when the first canopy portion is unfolded; and the second canopy portion has a first edge and a second edge, wherein the first edge is an edge that is engaged with a periphery of the box body when the second canopy portion is unfolded, and the second edge is an edge that is away from the box body when the first canopy portion is unfolded.

In an embodiment, when the first canopy portion is unfolded, the first edge and the second edge are substantially perpendicular to each other; and when the second canopy portion is unfolded, the first edge and the second edge of the second canopy portion are substantially perpendicular to each other.

In an embodiment, when both the first canopy portion and the second canopy portion are unfolded, the second edge of the first canopy portion and the second edge of the second canopy portion are engaged with each other to form an entire canopy.

In an embodiment, the canopy frame comprises a first frame and a second frame, the first frame and the second frame are respectively pivotably connected to the box body, and are pivotable relative to each other to be close to or away from each other; the first frame is connected to one of the first edge and the second edge of the first canopy portion, and the second frame is connected to one of the first edge and the second edge of the second canopy portion, to enable the first canopy portion and the second canopy portion to be opened or closed relative to the box body.

In an embodiment, the first frame is connected to the second edge of the first canopy portion, and the second frame is connected to the second edge of the second canopy portion. When the canopy is unfolded, the first frame and the second frame are pivoted relative to each other to be close to each other, to enable the first canopy portion and the second canopy portion to be engaged with each other to completely shield the accommodating space; and when the canopy is fully folded, the first frame and the second frame are pivoted relative to each other to be away from each other, to enable the first canopy portion and the second canopy portion to be folded.

In an embodiment, when the canopy is fully unfolded, the first frame and the second frame are substantially parallel to each other and substantially vertical to the box body. When the canopy is fully folded, the first frame and the second frame are substantially horizontal.

In an embodiment, the first edge of the first canopy portion is fixedly connected to the box body, and the first edge of the second canopy portion is fixedly connected to the box body.

In an embodiment, the first frame is connected to the first edge of the first canopy portion, and the second frame is connected to the first edge of the second canopy portion. When the canopy is unfolded, the first frame and the second frame are pivoted relative to each other to be away from each other, to enable the first edge of the first canopy portion and the first edge of the second canopy portion to be respectively engaged with the box body to completely shield the accommodating space. When the canopy is fully folded, the first frame and the second frame are pivoted relative to each other to be close to each other, to enable the first canopy portion and the second canopy portion to be folded.

In an embodiment, when the canopy is unfolded, the first frame and the second frame form a substantially horizontal frame body. When the canopy is fully folded, the first frame and the second frame are placed adjacent to each other in a substantially horizontal manner.

In an embodiment, the second edge of the first canopy portion is fixedly connected to the second edge of the second canopy portion.

A carrier according to the present disclosure comprises: a base; an interior cavity; and a canopy unit operably couplable to the base, the canopy unit including an openable canopy, wherein the openable canopy at least partially defines the interior cavity.

In an embodiment, the carrier further includes a sidewall secured to the base and partially defining the interior cavity.

In an embodiment, the sidewall extends upward about an entire perimeter of the base.

In an embodiment, the openable canopy is removably coupled to the base.

In an embodiment, each canopy includes a latch for connecting the canopy to the base.

In an embodiment, the latch includes a button actuator.

In an embodiment, the canopy unit includes a canopy bow movably relative to the base between a first position and a second position, the canopy unit being closed when the canopy bow is in the first position and the canopy unit being open when the canopy bow is in the second position.

In an embodiment, the second position is about 180 degrees from the first position.

In an embodiment, the second position is about 90 degrees from the first position.

In an embodiment, the carrier further includes a second canopy bow, a first end of the openable canopy being connected to the canopy bow, and a second end of the openable canopy being connected to the second canopy bow.

In an embodiment, the canopy bow and the second canopy bow are movable independently.

In an embodiment, the canopy unit further includes a locking mechanism operable to retain the canopy bow in the first position.

In an embodiment, the locking mechanism is a magnetic lock.

In an embodiment, the canopy unit further includes one or more support bows operably coupled to the openable canopy.

In an embodiment, the carrier further includes a second canopy unit couplable to the base, the second canopy unit having a second canopy that at least partially defines the interior cavity.

In an embodiment, the canopy unit and the second canopy unit are removably simultaneously from the base.

In an embodiment, the carrier further includes a center panel between the openable canopy and the second canopy, the center panel being fixed relative to the base.

In an embodiment, the carrier further includes a retention device proximate the center panel, the retention device being configured to hold the openable canopy in an open position.

In an embodiment, the carrier further includes at least one rigid latch connector arranged at the base, the at least one rigid latch connector being couplable to at least one seat anchor of a vehicle seat.

A carrier according to the present disclosure comprises at least one canopy unit, the canopy unit comprises a canopy frame and a canopy and a canopy bow, which are movable relative to the canopy frame. The canopy bow is connected to the canopy and is disposed on a first section of the carrier. The canopy frame is mounted on a second section of the carrier and is positioned on an inner side of the second section.

In an embodiment, the first section and the second section of the carrier are detachably disposed.

In an embodiment, the second section comprises a base and a sidewall. The sidewall is secured to the base and extends upward around a periphery of the base, and the canopy frame is disposed on an inner side of the sidewall.

In an embodiment, the canopy frame is positioned lower than an upper edge of the sidewall.

In an embodiment, the canopy bow is movable between a first position and a second position relative to the canopy frame. When the canopy bow is in the first position, the canopy unit is closed, and when the canopy bow is in the second position, the canopy unit is opened.

In an embodiment, when the canopy bow is in the first position, the canopy bow is positioned inside the carrier.

In an embodiment, the canopy bow is positioned on the inner side of the canopy; and/or, a part of the canopy bow extends beyond an edge of the canopy.

In an embodiment, when the canopy bow is in the first position, the canopy bow is positioned on the inner side of the sidewall and the inner side of the canopy, and the canopy bow is shielded by the sidewall and the canopy.

In an embodiment, when the canopy bow is in the first position, at least a part of the canopy bow is positioned inside the second section of the carrier.

A carrier according to the present disclosure comprises: at least one engaging structure capable of being converted between a locked state and an unlocked state; at least one unlocking structure located at a different position on the carrier from the engaging structure; and at least one connector connected to the engaging structure and the unlocking structure, the unlocking structure capable of being operated to convert the engaging structure to the unlocked state through the connector.

In an embodiment, the carrier is capable of being engaged with a base, the base is provided a base rod, and the engaging structure is capable of being engaged with a base rod of the base to be in the locked state.

In an embodiment, the carrier has an engaging rod at a bottom, the engaging rod forms an annular shape along a peripheral side of the carrier; and the base is provided with a base engaging slot, and the engaging rod is configured to be engaged with a base engaging groove of the base to secure the carrier to the base.

In an embodiment, the engaging structure comprises a mounting base. The mounting base is installed on the engaging rod. Two mounting holes are respectively disposed at two lateral sides of the mounting base, and the engaging rod is inserted into each of the mounting holes at the two lateral sides to be secured.

In an embodiment, the engaging structure comprises a first engaging structure and a second engaging structure symmetrically disposed along a longitudinal direction; and the unlocking structure comprises a first unlocking structure. The first unlocking structure is connected to the first engaging structure and the second engaging structure respectively through two connectors, and may be operated to unlock the first engaging structure and the second engaging structure simultaneously.

In an embodiment, the engaging structure further comprises a third engaging structure and a fourth engaging structure symmetrically disposed along the longitudinal direction; and the unlocking structure further comprises a second unlocking structure. The second unlocking structure is connected to the third engaging structure and the fourth engaging structure respectively through two connectors, and may be operated to unlock the third engaging structure and the fourth engaging structure simultaneously.

In an embodiment, the first engaging structure, the second engaging structure, and the first unlocking structure are positioned on a lateral side of the carrier, and the third engaging structure, the fourth engaging structure, and the second unlocking structure are positioned on another lateral side of the carrier.

In an embodiment, the carrier comprises: a box body; a first supporting tube close to a top surface of the box body and surrounding the peripheral side of the box body; and two second supporting tubes arranged laterally along the box body, each of the second supporting tubes being U-shaped, connected to both sides of the first supporting tube and enclosing a bottom surface of the box body.

In an embodiment, the engaging structure is disposed below the second supporting tube; the unlocking structure is disposed at an outer side of the first supporting tube; and the connector extends along an interior of each of the first supporting tube and the second supporting tube.

In an embodiment, the engaging structure comprises: a mounting member; an engaging hook pivotably connected to the mounting member; a first pin linearly and movably disposed in the mounting member and inserted into a sliding slot of the engaging hook, such that linear movement of the first pin causes the engaging hook to swing between a locked position and an unlocked position; and a first elastic member biasing the engaging hook towards the locked position.

In an embodiment, the mounting member is in a hollow structure, the engaging hook is accommodated in the mounting member, and the mounting member comprises: a rotating shaft hole penetrating through the mounting member laterally, the engaging structure comprises a rotating shaft disposed in the rotating shaft hole, the engaging hook rotates around the rotating shaft, and the first elastic member is disposed around the rotating shaft; a guiding hole penetrating through the mounting member laterally and being an elongated hole extending vertically, the first pin is disposed in the guiding hole; and an engaging hole penetrating through the mounting member laterally and opening towards a bottom surface of the mounting member, the base rod of the base is accommodated in the engaging hole; the engaging hook is provided with a hook recess engaged with the base rod. When the engaging hook is engaged with the base rod to be in the locked position, the hook recess corresponds to a position of the engaging hole.

In an embodiment, the connector comprises a first end connected to the engaging structure, the first end is sleeved on the first pin to drive the first pin to move linearly.

In an embodiment, the engaging structure further comprises a mounting base. The mounting base is sleeved on an outer side of the mounting member and comprises an engaging groove positioned on a bottom surface of the mounting base. The engaging hole of the mounting member is in communication with the engaging groove, and faces an exterior of the engaging structure through the engaging groove.

In an embodiment, the unlocking structure comprises: an operating member capable of being operated from an exterior of the carrier to move vertically between an initial state and a pressed state, when the operating member moves to the pressed state, it moves the engaging hook to the unlocked position through the connector, and the operating member is provided with an operating member slot extending vertically; a third pin secured to the carrier and inserted into the operating member slot to guide the operating member to move vertically; and a second elastic member biasing the operating member towards the initial state.

In an embodiment, the unlocking structure further comprises: at least one second pin linearly and movably disposed in the unlocking structure, the operating member has at least one inclined slot extending obliquely, the second pin is respectively inserted into the inclined slot; the connector comprises a second end connected to the unlocking structure, the second end is sleeved on the second pin; when the operating member moves to the pressed state, the inclined slot of the operating member drives the second pin to move linearly to pull the connector.

In an embodiment, the carrier is a bassinet for carrying a pet.

### BRIEF DESCRIPTION OF THE DRAWINGS

The accompanying drawings, which are incorporated into and constitute a part of this specification, illustrate embodiments consistent with the present disclosure, and serve to explain the principles of the present disclosure together with the description.
FIG. 1 shows a perspective view of a carrier according to an embodiment of the present disclosure.
FIG. 2 shows a front view of the carrier shown in FIG. 1.
FIGS. 3 and 4 show perspective views of the carrier shown in FIG. 1 in a partially-covered state, respectively.
FIG. 5 shows a perspective view of the carrier shown in FIG. 1 in a fully open state.
FIG. 6 shows a perspective view of a carrier according to another embodiment of the present disclosure.
FIG. 7 shows a front view of the carrier shown in FIG. 6.
FIG. 8 shows another perspective view of the carrier shown in FIG. 6, with a canopy removed.
FIG. 9 shows a perspective view of the carrier shown in FIG. 8 after removing a seat cloth.
FIG. 10 shows a partial exploded perspective view of the carrier shown in FIG. 9.
FIGS. 11 and 12 show perspective views of the carrier shown in FIG. 6 in a partially covered state, respectively.
FIG. 13 shows a perspective view of the carrier shown in FIG. 6 in a fully open state.
FIG. 14 shows a front view of the carrier shown in FIG. 6 in another fully open state.
FIG. 15 shows a perspective view of the carrier shown in FIG. 14.
FIG. 16 is a perspective view of a pet carrier having a canopy in a closed state according to an embodiment;
FIG. 17 is a perspective view of the pet carrier of FIG. 16 having a canopy in an open state according to an embodiment;
FIG. 18A is a front perspective view of the pet carrier of FIG. 16 with the canopy shown as transparent according to an embodiment;
FIG. 18B is another front perspective view of the pet carrier of FIG. 16 with the canopy shown as transparent according to an embodiment;
FIGS. 19A, 19B, and 19C are front views of the pet carrier of FIG. 18A arranged respectively in a closed state, partially open state, and fully open state according to an embodiment;
FIG. 20A is a perspective view of a lock mechanism in a disengaged position according to an embodiment;
FIG. 20B is a perspective view of a lock mechanism in an engaged position according to an embodiment;
FIG. 21 is a front view of the pet carrier of FIG. 16 having the canopy separated from the base according to an embodiment;
FIG. 22A is a perspective view of a pet carrier having a plurality of canopies in a closed state according to an embodiment;
FIG. 22B is a front view of a pet carrier having a plurality of canopies in a closed state;
FIG. 23 is a perspective view of a pet carrier having a plurality of canopies in an open state according to an embodiment;
FIG. 24A is a perspective view of the pet carrier of FIG. 16 with the canopies shown as transparent according to an embodiment;
FIG. 24B is a front view of the pet carrier of FIG. 16 with the canopy shown as transparent according to an embodiment;
FIGS. 25A, 25B, and 25C are front views of the pet carrier of FIG. 22B, arranged in a partially open state, arranged in another partially open state, and arranged in a fully open state according to an embodiment;
FIG. 26 is a front view of the pet carrier of FIG. 22B having the plurality of canopies separated from the base according to an embodiment;
FIG. 27 is a front view of a pet carrier according to an embodiment.
FIG. 28 is a perspective view of the carrier and a base in an attached state according to the present disclosure.
FIG. 29 is a perspective view of the carrier and the base in a separated state.
FIG. 30 is a partial enlarged view of an area blocked in FIG. 29.
FIG. 31 is a perspective view of the base according to the present disclosure, with an outer cover removed to show an internal structure.
FIG. 32 is a perspective view of the carrier and a cart in an attached state according to the present disclosure.
FIG. 33 is a perspective view of the carrier and the cart in a separated state.
FIGS. 34 to 36 are perspective views of the carrier from different angles.
FIG. 37 is a partial enlarged view of an area blocked in FIG. 36.
FIG. 38 is a perspective view of the carrier, with the engaging structure shown in a disassembled state.
FIG. 39 is a partial enlarged view of an area blocked in FIG. 38.
FIG. 40 is a side sectional view of the carrier and the base.
FIG. 41A is a partial enlarged view of an area blocked in FIG. 40, showing the engaging structure in a locked state. FIG. 41B shows the engaging structure in an unlocked state.
FIG. 42 is a side view of the carrier, with the unlocking structure shown in a sectional state.
FIG. 43A is a partial enlarged view of an area blocked in FIG. 42, showing the unlocking structure in an initial state. FIG. 43B shows an unlocking structure in a pressed state.
FIG. 44 is a perspective view of a connector according to the present disclosure.

### Reference numbers are listed as follows:

100, 200 carrier
110, 210 box body
111, 211 body
112, 212 peripheral wall
113, 213 accommodating space
114, 214 upper edge
120, 220 bracket device
221 first bracket
222 second bracket
223 third bracket
1231, 2231 engaging member
225 mounting base
2251 first mounting portion
2252 second mounting portion
130, 230 canopy assembly
131, 231 canopy frame
1311, 2311 first frame
1312, 2312 second frame
1313, 2313 first pivoting portion
1314, 2314 second pivoting portion
133, 233 canopy
1331, 2331 first canopy portion
1331a, 2331a first edge of the first canopy portion
1331b, 2331b second edge of the first canopy portion
1332, 2332 second canopy portion
1332a, 2332a first edge of the second canopy portion
1332b, 2332b second edge of the second canopy portion
134, 234 connecting strap
1341, 2341 first end
1342, 2342 second end
135, 235 fastener
1351, 2351 female connector
1352, 2352 male connector
150, 250 seat cloth
260 carrying handle
D2 length direction
D1, D3 width direction
L2600 pet carrier
L26 front portion
L28 rear portion
L2602 first section
L2604 second section
L2606 base
L2607 sidewall
L2610 canopy unit
L2612 canopy frame
L2614 canopy bow
L2616 canopy
L2618 first positioning end
L2620 second positioning end
L2622 first frame portion
L2624 second frame portion
L2626 first end
L2628 second end
L2630 support bow
L2632, L2632a, L2632b first portion
L2634 second portion
L2640 connector
L2642 first portion, buckle
L2644 second portion, latch plate
L2700 pet carrier
L2702 first section
L2704 second section
L2706 base
L2707 sidewall
L2710 first canopy unit
L2712 second canopy unit
L2714a first canopy bow
L2714b second canopy bow
L2716a, L2716b canopy frame
L2718a, L2718b, L2720a, L2720b mounting end
L2722 center panel
L2724 single canopy
L2724a first canopy
L2724b second canopy
L2726, L2726a, L2726b first end
L2728, L2728a, L2728b second end
L2730a first structural support or support bow
L2730b support
L2740 connector
L2742 first portion, buckle
L2744 second portion, latch plate
L30 left side
L32 right side
M320 pet carrier
   M321 enclosed side
M370 canopy
N100 engaging structure
   N101 first engaging structure
   N102 second engaging structure
   N103 third engaging structure
   N104 fourth engaging structure
   N110 mounting member
      N111 rotating shaft hole
      N112 guiding hole
      N113 engaging hole
   N120 engaging hook
      N121 pivoting end
      N122 hook portion
      N123 sliding slot
      N125 hook recess
   N130 rotating shaft
   N140 first pin
   N150 first elastic member
   N160 mounting base
      N161 mounting hole
      N162 cushioning pad
      N163 engaging groove
      N164 side hole
   N200 unlocking structure
      N201 first unlocking structure
      N202 second unlocking structure
      N210 operating member
         N211 operating member slot
         N212 inclined slot
      N220 second pin
      N230 second elastic member
      N240 third pin
   N300 connector
      N310 cable
      N320 cable sleeve
      N330 first end
      N340 second end
   N400 carrier
      N410 engaging rod
      N420 box body
      N430 first supporting tube
      N440 second supporting tube
   N500
      base
         N510 base rod
         N520 outer cover
         N530 main tube
         N540 base engaging groove
      N600 cart
         N610 cart engaging groove

### DETAILED DESCRIPTION

Hereinafter, exemplary embodiments of the present disclosure will be described in detail with reference to the accompanying drawings. Although the present disclosure is susceptible to various modifications and alternative forms, specific embodiments thereof are shown by way of example in the drawings. However, the present disclosure should not be construed as being limited to the embodiments set forth herein. Instead, the present disclosure is intended to cover all modifications, equivalents, and alternatives falling within the spirit and scope of the present disclosure.

The present disclosure will now be described in detail with reference to the accompanying drawings.

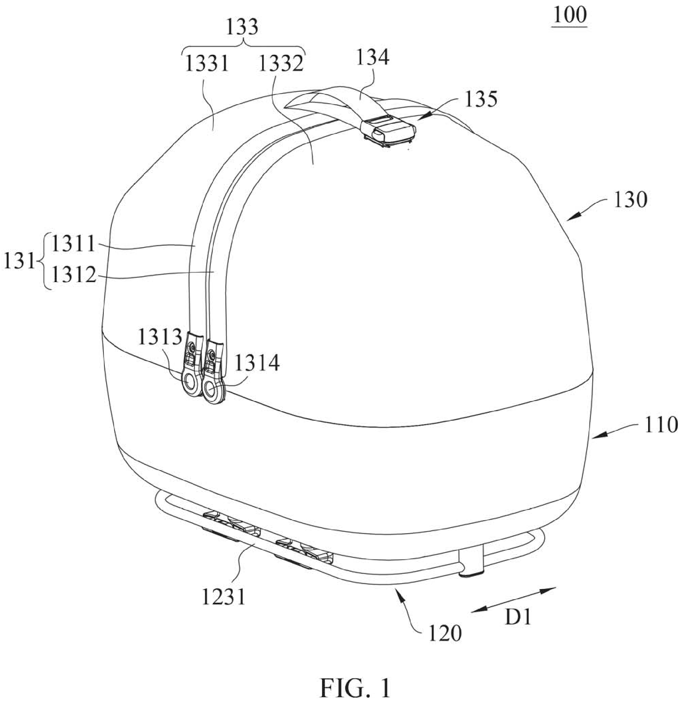

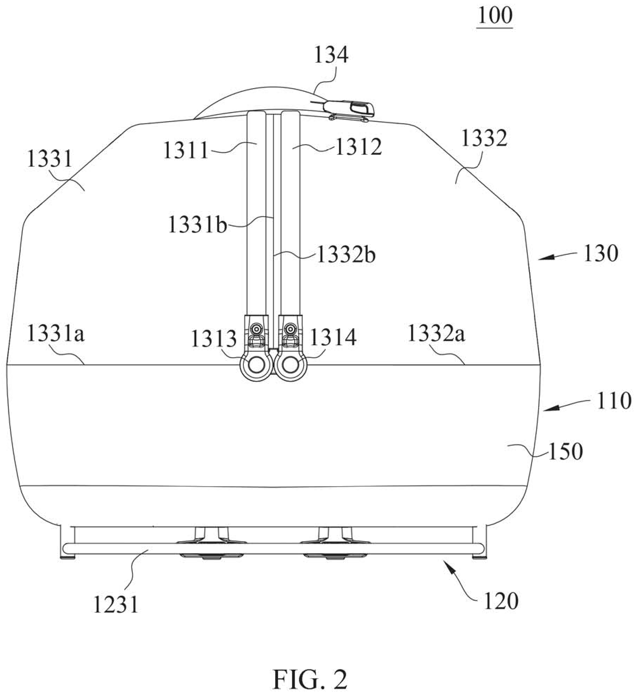

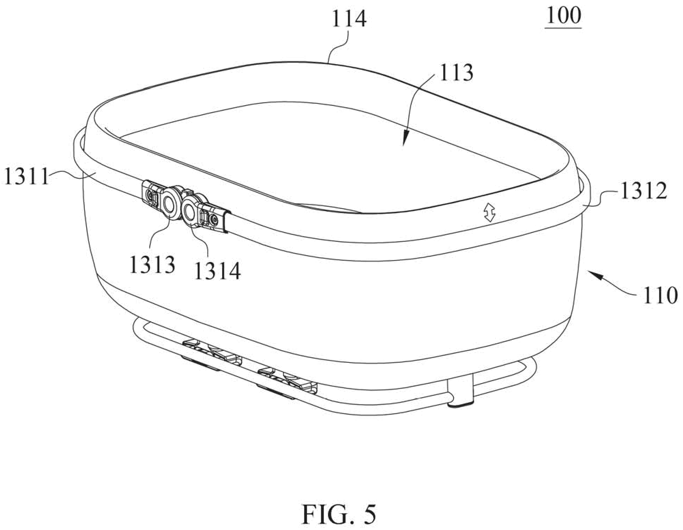

Referring to FIGS. 1 to 5, FIG. 1 shows a perspective view of a carrier 100 according to an embodiment of the present disclosure, where the carrier 100 is in a fully covered state; FIG. 2 shows a front view of the carrier 100 shown in FIG. 1; FIGS. 3 and 4 respectively show perspective views of the carrier 100 shown in FIG. 1 in a partially covered state; and FIG. 5 shows a perspective view of the carrier 100 shown in FIG. 1 in a fully open state.

As shown in FIGS. 1 to 3, the carrier 100 may include a box body 110, a bracket device 120, and a canopy assembly 130. The box body 110 has a bottom and a peripheral wall 112 connected around the bottom, forming an accommodating space 113 for carrying a pet therein. The bracket device 120 is configured such that at least a part thereof is disposed below the box body 110 and is used to support the box body 110. In an example, as shown in FIGS. 1 and 2, the bracket device 120 comprises an engaging member 1231, which is spaced from the box body 110 and disposed below the box body 110. Specifically, the engaging member 1231 may be an annular structural member. In addition, the engaging member 1231 may also cooperate with a mounting base assembly and/or a fastening strap assembly to secure the carrier 100 to a vehicle seat (not shown).

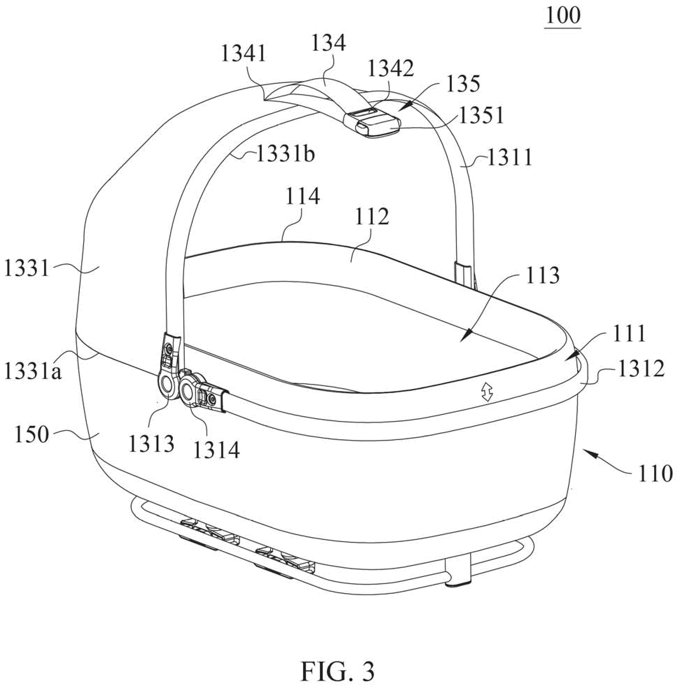

In an example, a seat cloth 150 is at least partially sleeved around the carrier 100. Specifically, as shown in FIGS. 1 and 3, the box body 110 may include a body 111 and a seat cloth 150 that covers the exterior of the body 111. In this embodiment, the seat cloth 150 at least partially covers the box body 110, and the engaging member 1231 of the bracket device 120 is positioned outside the seat cloth 150. In another embodiment, the seat cloth 150 may also cover a part of the bracket device 120, and the engaging member 1231 is still positioned outside the seat cloth 150, but the present disclosure is not limited thereto. In an example, the body 111 may be a foam body, for example, made of foamed polypropylene (EPP), foamed polyethylene (EPE), foamed ethylene (EPO), or other foamed materials.

Referring to FIGS. 1 and 2, the canopy assembly 130 may include a canopy frame 131 and a canopy 133. The canopy 133 is disposed above to cover the box body 110 to shield the accommodating space 113 of the box body 110 (see FIG. 3). The canopy frame 131 is connected to the canopy 133 and supports the canopy 133. The canopy frame 131 is pivotally connected to the box body 110, enabling the canopy 133 to be unfolded or folded relative to the box body 110. In other embodiments, the bracket device 120 may also include a first bracket (not shown due to being covered by the seat cloth 150) that surrounds the box body 110, and the canopy frame 131 may be pivotally connected to the first bracket. Optionally, the first bracket may be disposed close to an opening at the top of the box body 110, but the present disclosure is not limited thereto.

In this embodiment, the canopy frame 131 may include a first frame 1311 and a second frame 1312. The first frame 1311 and the second frame 1312 are respectively pivotally connected to the box body 110 and are pivotable relative to each other to move close to or away from each other. Further referring to FIGS. 3 to 5, the first frame 1311 may be pivoted relative to the box body 110 between a first position and a second position, where the first frame 1311 is substantially parallel to an upper edge 114 of the box body 110 when pivoted to the first position, and is substantially perpendicular to an upper edge 114 of the box body 110 when pivoted to the second position. Correspondingly, the second frame 1312 may also be pivoted between a first position and a second position relative to the box body 110, where the second frame 1312 is substantially parallel to an upper edge 114 of the box body 110 when pivoted to the first position, and is substantially perpendicular to an upper edge 114 of the box body 110 when pivoted to the second position. That is, when the first frame 1311 and the second frame 1312 are both in their respective first positions, they are considered to be farthest from each other; and when the first frame 1311 and the second frame 1312 are in their respective second positions, they are considered to be closest to each other. Certainly, when the first frame 1311 or the second frame 1312 are pivoted individually, in the absence of interference, the first frame 1311 or the second frame 1312 may also be pivoted to other positions beyond their second positions, for example, continuing to pivot a certain angle over the second position, and the present disclosure does not limit this.

Specifically, as shown in FIGS. 1, 3, and 4, two ends of the first frame 1311 may be pivotally connected to two sides of the box body 110 via the first pivoting portion 1313, and two ends of the second frame 1312 may be pivotally connected to the two sides of the box body 110 via the second pivoting portion 1314. For example, the two ends of the first frame 1311 may be respectively disposed on the two sides (i.e., two opposite long sides) of the box body 110 along a width direction D1, and the two ends of the second frame 1312 may also be respectively disposed on the two sides of the box body 110 along a width direction D1. As shown in FIGS. 1 and 2, the first frame 1311 and the second frame 1312 are adjacent to each other, that is, the first pivoting portion 1313 and the second pivoting portion 1314 on the same side are adjacent to each other.

Referring to FIGS. 3 to 5, in this embodiment, the first pivoting portion 1313 and the second pivoting portion 1314 may be disposed on an outer side of a peripheral wall 112 of the box body 110 and positioned below the upper edge 114 (i.e., lower than the upper edge 114) of the box body 110. In other words, when the first frame 1311 and/or the second frame 1312 of the canopy frame 131 are pivoted to the first position, they are positioned below the upper edge 114 of the box body 110.

The first frame 1311 and the second frame 1312 may each have a U-shaped structure, but the present disclosure is not limited thereto, and may have other shapes, as long as they may surround the box body 110 when being placed substantially parallel to the upper edge of the box body 110.

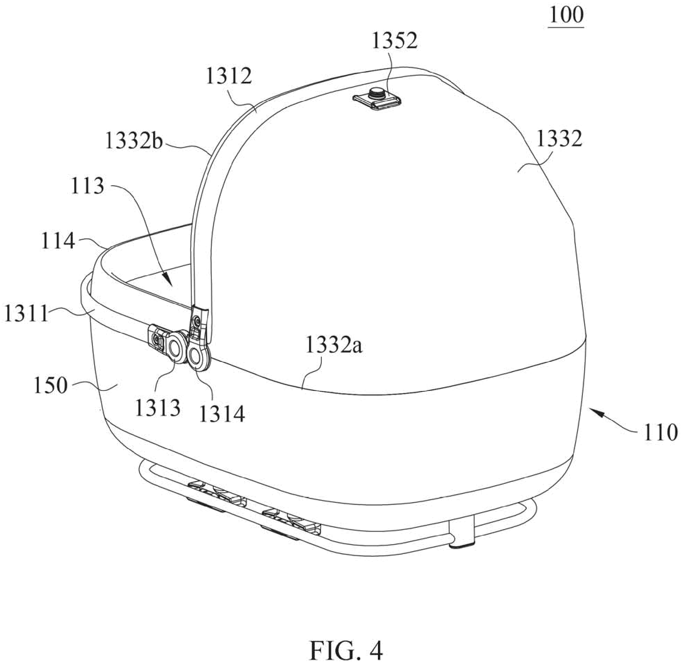

In an embodiment, as shown in FIGS. 1 to 4, the canopy 133 comprises a first canopy portion 1331 and a second canopy portion 1332. The first canopy portion 1331 and the second canopy portion 1332 may be unfolded or folded relative to the box body 110. For example, the canopy 133 in this embodiment has three usage states: a fully covered state, a partially covered state, and a fully open state. As shown in FIG. 1, when both the first canopy portion 1331 and the second canopy portion 1332 are unfolded, that is, when the canopy 133 is fully unfolded, the canopy 133 is in the fully covered state. As shown in FIGS. 3 and 4, when one of the first canopy portion 1331 and the second canopy portion 1332 is unfolded and the other of the first canopy portion 1331 and the second canopy portion 1332 is folded, the canopy 133 is in the partially covered state, in which at least a part of the accommodating space 113 of the carrier 100 is exposed, for example, half of the accommodating space 113 is exposed. As shown in FIG. 5, when both the first canopy portion 1331 and the second canopy portion 1332 are folded, that is, when the canopy 133 is fully folded, the canopy 133 is in the fully open state, in which the accommodating space 113 of the carrier 100 is fully exposed.

Generally, it is possible to use the fully covered state during the transportation of the carrier 100 to ensure better protection for the pet inside the carrier 100; the partially covered state may be used when the user needs to take the pet out of or put the pet into the carrier 100; and the fully open state is a state possessed by the box body 100 when it is packaged at the factory. In this state, the box body 100 has a relatively small volume, so it is also suitable for the user to store the carrier 100 when not in use.

In this embodiment, as shown in FIGS. 2 to 4, the first canopy portion 1331 has a first edge 1331a and a second edge 1331b, where the first edge 1331a is an edge that is engaged with a periphery of the box body 110 when the first canopy portion 1331 is unfolded, and the second edge 1331b is an edge that is away from the box body 110 when the first canopy portion 1331 is unfolded. Correspondingly, the second canopy portion 1332 has a first edge 1332a and a second edge 1332b, where the first edge 1332a is an edge that is engaged with the periphery of the box body 110 when the second canopy portion 1332 is unfolded, and the second edge 1332b is an edge that is away from the box body 110 when the second canopy portion 1332 is unfolded. As shown in FIG. 2, when the first canopy portion 1331 is unfolded, the first edge 1331a and the second edge 1331b of the first canopy portion 1331 are substantially perpendicular to each other. Correspondingly, when the second canopy portion 1332 is unfolded, the first edge 1332a and the second edge 1332b of the second canopy portion 1332 are substantially perpendicular to each other. When both the first canopy portion 1331 and the second canopy portion 1332 are unfolded, the second edge 1331b of the first canopy portion 1331 and the second edge 1332b of the second canopy portion 1332 are engaged with each other to form an entire canopy 133.

In a specific example, the first frame 1311 is connected to one of the first edge 1331a and the second edge 1331b of the first canopy portion 1331, and the second frame 1312 is connected to one of the first edge 1332a and the second edge 1332b of the second canopy portion 1332, to enable the first canopy portion 1331 and the second canopy portion 1332 to be unfolded or folded relative to the box body 110.

In this embodiment, as shown in FIGS. 2 to 4, the first frame 1311 is connected to the second edge 1331b of the first canopy portion 1331, and the second frame 1312 is connected to the second edge 1332b of the second canopy portion 1332. When the canopy 133 is unfolded, as shown in FIGS. 1 and 2, the first frame 1311 and the second frame 1312 may be pivoted relative to each other to move close to each other, so that the first canopy portion 1331 and the second canopy portion 1332 may be close to and engaged with each other, for example, by combining the second edge 1331b of the first canopy portion 1331 with the second edge 1332b of the second canopy portion 1332, thereby completely shielding the accommodating space 113. At this time, the first frame 1311 and the second frame 1312 are substantially parallel to each other and substantially vertical to the box body 110 (that is, both are in the second position).

As shown in FIGS. 3 and 4, when it is necessary to open the canopy 133 to the partially covered state, that is, when the first canopy portion 1331 or the second canopy portion 1332 is folded, one of the first frame 1311 and the second frame 1312 may be pivoted in a direction away from the other to correspondingly fold the first canopy portion 1331 or the second canopy portion 1332. When the canopy 133 is in the partially covered state, one of the first frame 1311 and the second frame 1312 is in the first position, while the other of the first frame 1311 and the second frame 1312 is in the second position. As shown in FIG. 5, when it is necessary to fully fold the canopy 133, the first frame 1311 and the second frame 1312 may be pivoted relative to each other to be away from each other, thereby folding the first canopy portion 1331 and the second canopy portion 1332 until both the first frame 1311 and the second frame 1312 are substantially horizontal (that is, both are in the first position), forming a substantially horizontal frame body surrounding the box body 110, so that the canopy 133 (comprising the first canopy portion 1331 and the second canopy portion 1332) is fully folded, thereby completely exposing the accommodating space 113. As shown in FIGS. 3 to 5, when the first canopy portion 1331 and/or the second canopy portion 1332 are folded, they are positioned below the upper edge 114 of the box body 110 together with the corresponding first frame 1311 and/or second frame 1312, so as to avoid interfering with the user's action of putting the pet in or taking the pet out.

Optionally, the first edge 1331a of the first canopy portion 1331 may be non-detachably connected to the box body 110, and the first edge 1332a of the second canopy portion 1332 may be non-detachably connected to the box body 110. For example, as shown in FIGS. 2 to 4, the first edge 1331a of the first canopy portion 1331 and the first edge 1332a of the second canopy portion 1332 may be respectively fixedly connected to the seat cloth 150 of the box body 110 by means such as stitching, but the present disclosure is not limited thereto, and other ways may also be used to achieve the fixed connection. That is, in this embodiment, whether the first canopy portion 1331 and/or the second canopy portion 1332 are unfolded or folded, the first edge 1331a of the first canopy portion 1331 and the first edge 1332a of the second canopy portion 1332 are always fixedly connected to the seat cloth 150 and thus are non-detachable.

As shown in FIGS. 1 and 2, the carrier 100 may also include a connecting strap 134 and a fastener 135. The connecting strap 134 has a first end 1341 and a second end 1342, one of which is fixedly connected to the first canopy portion 1331 (or the second canopy portion 1332) of the canopy 133. The fastener 135 comprises a female connector 1351 and a male connector 1352 detachably connected to each other, which are respectively disposed on the other of the first end 1341 and the second end 1342 of the connecting strap 134 and the second canopy portion 1332 (or the first canopy portion 1331) of the canopy 133, for keeping the first canopy portion 1331 and the second canopy portion 1332 engaged with each other. For example, in this embodiment, the first end 1341 of the connecting strap 134 may be fixedly connected to the first canopy portion 1331 by means such as stitching, the second end 1342 of the connecting strap 134 is provided with the female connector 1351, and the second canopy portion 1332 is correspondingly provided with the male connector 1352. When the first canopy portion 1331 and the second canopy portion 1332 are engaged with each other (that is, in the fully covered state), the female connector 1351 and the male connector 1352 of the fastener 135 may be engaged with each other to connect and fix the first canopy portion 1331 and the second canopy portion 1332, thereby preventing the first canopy portion 1331 and the second canopy portion 1332 from being separated during the movement of the box body 110.

In an example, as shown in FIG. 1, the connecting strap 134 may be formed by a single connecting webbing, which extends from the female connector 1351 of the fastener 135 and has both ends secured to the canopy 133. In addition, the fastener 135 may employ a magnetic buckle structure, that is, the female connector 1351 and the male connector 1352 may be a female buckle and a male buckle that are cooperated with each other. However, the present disclosure is not limited thereto, and the fastener 135 may also use a zipper, a hook and loop fastener (e.g., Velcro), a snap button, a plug buckle, a hanging buckle, a hook buckle, and the like.

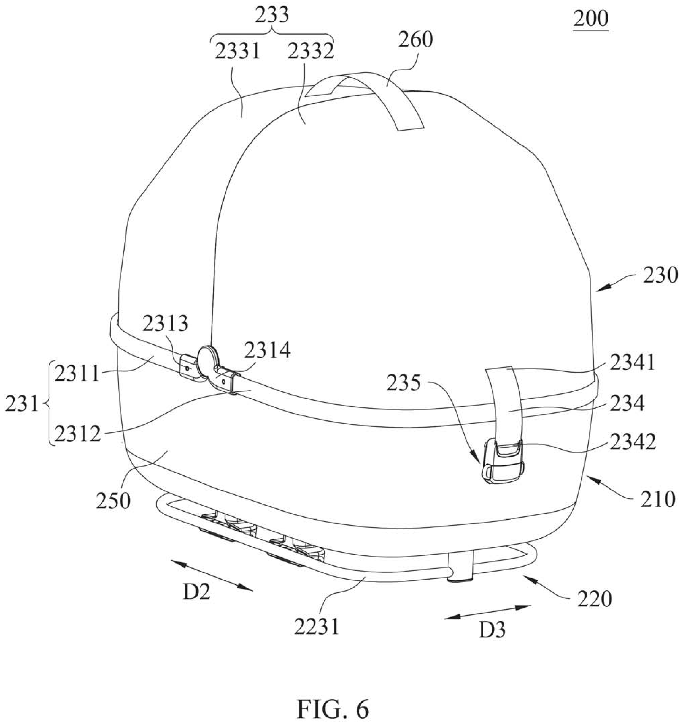

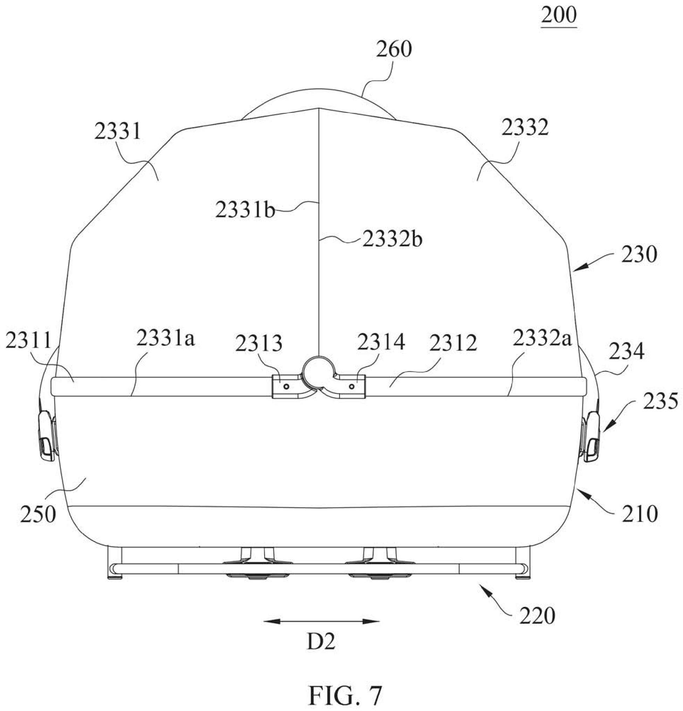

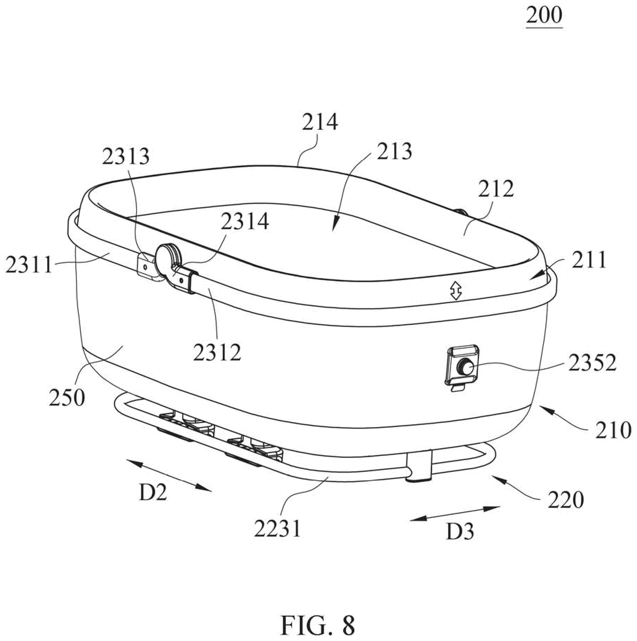

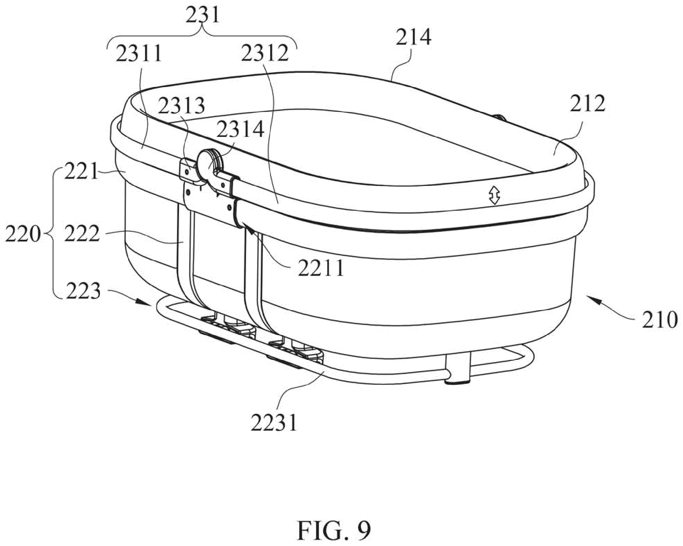

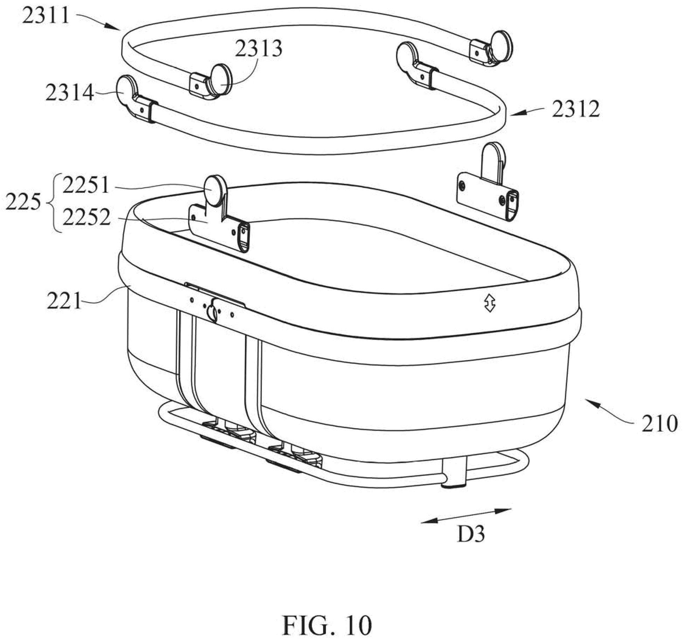

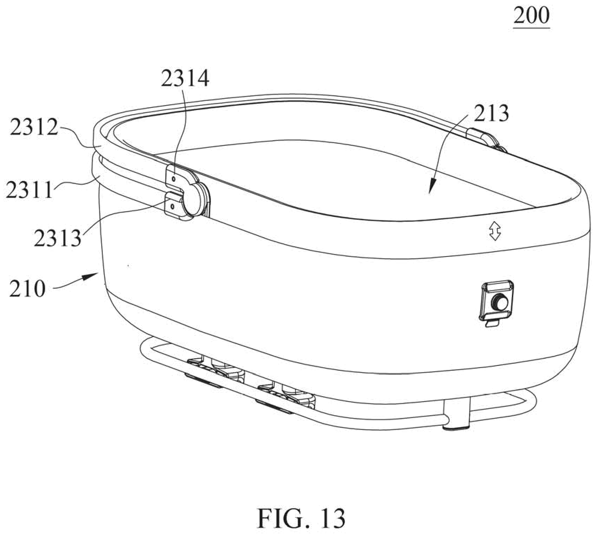

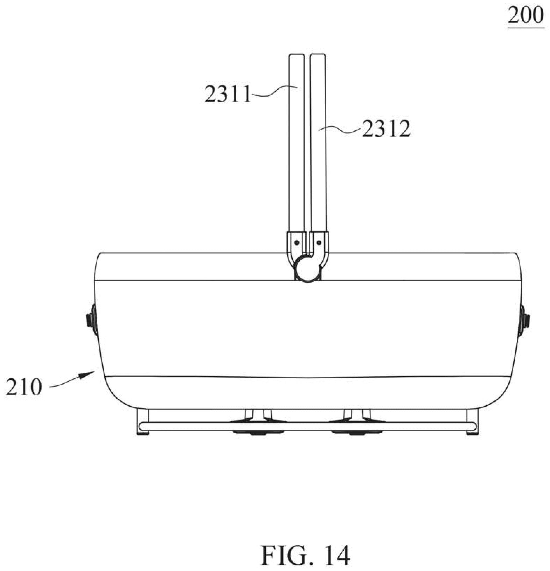

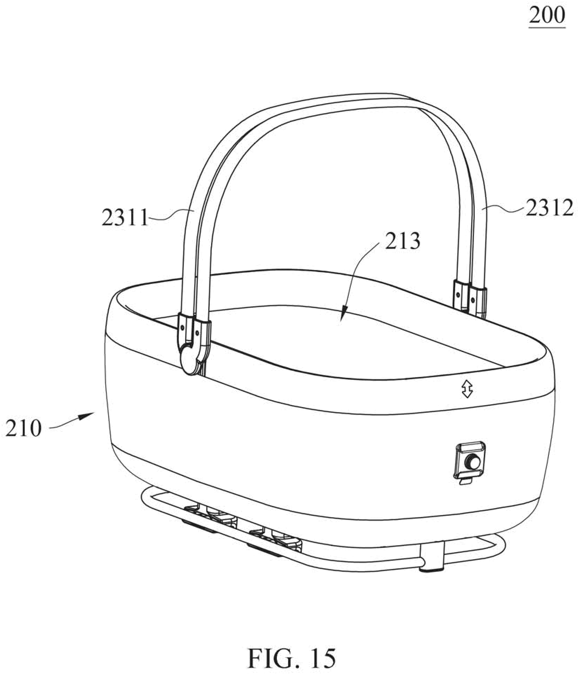

Referring to FIGS. 6 to 15, a carrier 200 according to another embodiment of the present disclosure is shown. Specifically, FIG. 6 shows a perspective view of the carrier 200 according to another embodiment of the present disclosure, where the carrier 200 is in a fully covered state; FIG. 7 shows a front view of the carrier 200 shown in FIG. 6; FIG. 8 shows another perspective view of the carrier 200 shown in FIG. 6, with the canopy 230 removed to show the specific structure of the canopy frame 231; FIG. 9 shows a perspective view of the carrier 200 shown in FIG. 8 after removing the seat cloth 250; FIG. 10 shows a partial exploded perspective view of the carrier 200 shown in FIG. 9; FIGS. 11 and 12 respectively show perspective views of the carrier 200 shown in FIG. 6 in a partially covered state; FIG. 13 shows a perspective view of the carrier 200 shown in FIG. 6 in a fully open state; and FIGS. 14 and 15 show a front view and a perspective view of the carrier 200 shown in FIG. 6 in another fully open state.

As shown in FIGS. 6 to 9, the carrier 200 may include a box body 210, a bracket device 220, and a canopy assembly 230. The box body 210 has a bottom and a peripheral wall 212 connected around the bottom, forming an accommodating space 213 for carrying a pet therein. The bracket device 220 is configured such that at least a part thereof is disposed below the box body 210 and supports the box body 210. The box body 210 may include a body 211 and a seat cloth 250 that covers the exterior of the body 211. As shown in FIG. 6, the seat cloth 250 at least partially covers the box body 210, and optionally, the seat cloth 250 may also at least partially cover the bracket device 220, with a part of the bracket device 220 (e.g., the engaging member 2231) positioned outside the seat cloth 250 for mounting and securing. In an example, the body 211 may be a foam body, for example made of foamed polypropylene (EPP), foamed polyethylene (EPE), foamed ethylene (EPO), or other foamed materials.

As shown in FIG. 9, in this embodiment, the bracket device 220 may include a first bracket 221, a second bracket 222, and a third bracket 223. The first bracket 221 is substantially horizontally disposed at an upper end of the bracket device 220, surrounds the box body 210, and is close to an opening of the box body 210 (that is, close to the upper edge 214 of the box body 210, but at a certain distance therefrom). The third bracket 223 is substantially horizontally disposed at a lower end of the bracket device 220 and comprises an engaging member 2231. The engaging member 2231 is spaced from the box body 210 and positioned below the box body 210, for cooperating with a mounting base assembly and/or a fastening strap assembly to secure the carrier 200 to a vehicle seat. The second bracket 222 is connected between the first bracket 221 and the third bracket 223. The second bracket 222 comprises a plurality of U-shaped structures in parallel and forms a side frame and a bottom frame of the bracket device 220 to contact and support the side and bottom surfaces of the box body 210. Referring to FIGS. 8 and 9, when the seat cloth 250 covers the exterior of the box body 210, the seat cloth 250 covers the first bracket 221 and the second bracket 222 of the bracket device 220, while the third bracket 223 is exposed outside the seat cloth 250 to achieve cooperation with the mounting base assembly and/or the fastening strap assembly.

The canopy assembly 230 may include a canopy frame 231 and a canopy 233. The canopy 233 is disposed above to cover the box body 210 to shield the accommodating space 213 of the box body 210. The canopy frame 231 is connected to and supports the canopy 233. The canopy frame 231 is pivotally connected to the box body 210 or the bracket device 220, enabling the canopy 233 to be unfolded or folded relative to the box body 210.

Specifically, as shown in FIGS. 8 to 10, the canopy frame 231 may include a first frame 2311 and a second frame 2312. The two ends of the first frame 2311 are respectively positioned on the two sides of the box body 210 along a width direction D3 (that is, the two opposite long sides) and are pivotally connected to the bracket device 220 (for example, the first bracket 221) via the first pivoting portion 2313. Correspondingly, the two ends of the second frame 2312 are also respectively positioned on the two sides of the box body 210 along the width direction D3 and are pivotally connected to the bracket device 220 (for example, the first bracket 221) via the second pivoting portion 231, so that the first frame 2311 and the second frame 2312 may be pivoted relative to each other to be close to or away from each other. In this embodiment, the first pivoting portion 2313 and the second pivoting portion 2314 may be disposed on the outer side of the peripheral wall 212 of the box body 210 and positioned below the upper edge 214 of the box body 210 (that is, lower than the upper edge 214).

Unlike the previous embodiments, the first pivoting portion 2313 and the second pivoting portion 2314 are at least partially overlapped in this embodiment. Optionally, the first pivoting portion 2313 and the second pivoting portion 2314 may have the same pivoting point, that is, the first pivoting portion 2313 and the second pivoting portion 2314 are pivotally connected to the bracket device 220 via the same pivoting shaft and are pivotable relative to each other.

Referring to FIGS. 9 and 10, the bracket device 220 is provided with a mounting base 225 for installing the canopy frame 231. In an example, two mounting bases 225 may be provided, respectively positioned on the two sides of the box body 210 along a width direction D3 (that is, the two opposite long sides). Optionally, the two mounting bases 225 are respectively positioned at a middle of the two long sides of the box body 210. Each mounting base 225 comprises a first mounting portion 2251 and a second mounting portion 2252. The second mounting portion 2252 is disposed on the bracket device 220, for example, on the first bracket 221. In an example, the second mounting portion 2252 may be a clamp for being clamped onto the first bracket 221 and may be further fixedly connected by a screw or the like. The first mounting portion 2251 is disposed above the second mounting portion 2252 and is configured to connect the first frame 2311 and the second frame 2312 of the canopy frame 231. In this embodiment, the first pivoting portion 2313 at the either end of the first frame 2311 may have a first pivoting hole, and the second pivoting portion 2314 at the either end of the second frame 2312 may have a second pivoting hole. The first mounting portion 2251 of the mounting base 225 maybe provided with a third pivoting hole, and the positions of the first pivoting hole, the second pivoting hole, and the third pivoting hole correspond to each other. By passing a pivoting shaft through the first pivoting hole, the third pivoting hole, and the second pivoting hole in sequence, the first frame 2311 and the second frame 2312 are pivotally connected to the first mounting portion 2251 of the mounting base 225 and may be pivoted relative to each other coaxially to be pivoted between their respective first position, second position, and third position. It should be noted that the first position refers to a position where the first frame 2311 or the second frame 2312 is pivoted to a substantially horizontal position on one side thereof, the second position refers to a position where the first frame 2311 or the second frame 2312 is substantially vertical, and the third position refers to a position where the first frame 2311 or the second frame 2312 is pivoted to a substantially horizontal position after passing over the second position.

In an embodiment, the canopy 233 comprises a first canopy portion 2331 and a second canopy portion 2332 that may be unfolded or folded relative to the box body 210. As shown in FIG. 7, the first canopy portion 2331 has a first edge 2331a and a second edge 2331b. The first edge 2331a is an edge engaged with the periphery of the box body 210 when the first canopy portion 2331 is unfolded, while the second edge 2331b is an edge away from the box body 210 when the first canopy portion 2331 is unfolded. Correspondingly, the second canopy portion 2332 has a first edge 2332a and a second edge 2332b. The first edge 2332a is an edge engaged with the periphery of the box body 210 when the second canopy portion 2332 is unfolded, while the second edge 2332b is an edge away from the box body 210 when the second canopy portion 2332 is unfolded. When the first canopy portion 2331 and the second canopy portion 2332 are unfolded, the first edge 2331a and the second edge 2331b of the first canopy portion 2331 are substantially perpendicular to each other, and the first edge 2332a and the second edge 2332b of the second canopy portion 2332 are also substantially perpendicular to each other.

In this embodiment, the first canopy portion 2331 and the second canopy portion 2332 form an integral canopy, that is, the first canopy portion 2331 and the second canopy portion 2332 are integrally formed, or the second edge 2331b of the first canopy portion 2331 and the second edge 2332b of the second canopy portion 2332 are fixedly connected, for example, by stitching or the like, but the present disclosure is not limited thereto.

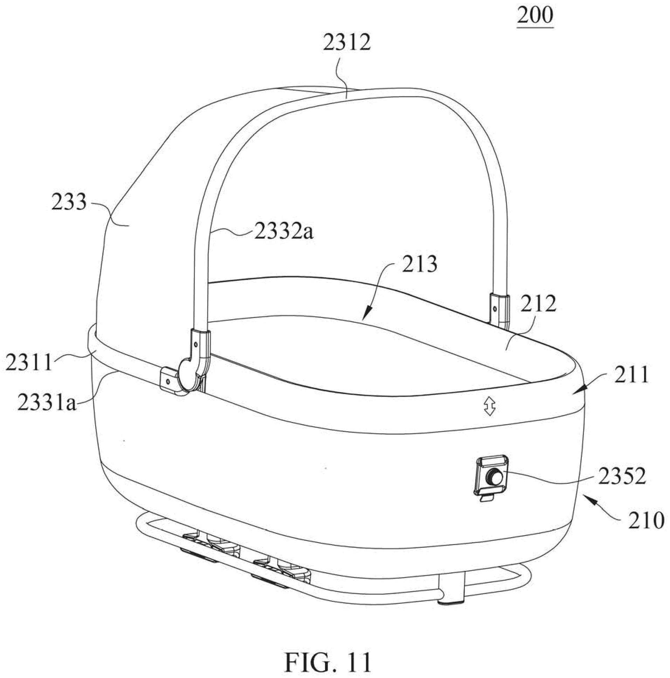

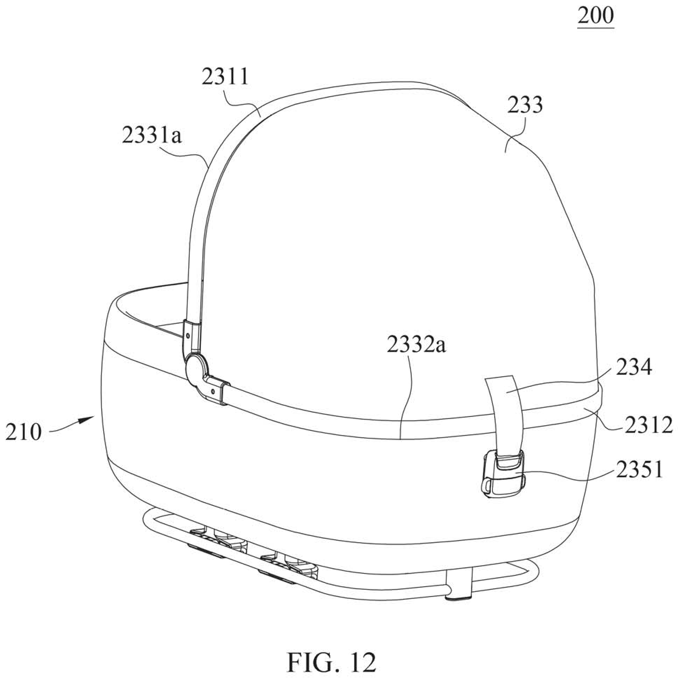

Specifically, referring to FIGS. 6, 7, and 11 to 15, the canopy 233 has three usage states: a fully covered state, a partially covered state, and a fully open state. As shown in FIGS. 6 and 7, when both the first canopy portion 2331 and the second canopy portion 2332 are unfolded, the canopy 233 is in the fully covered state. As shown in FIGS. 11 and 12, when the first edge 2331a of the first canopy portion 2331 and the first edge 2332a of the second canopy portion 2332 are moved close to each other to be substantially perpendicular to each other, the canopy 233 is in the partially covered state. As shown in FIGS. 13 to 15, when both the first canopy portion 2331 and the second canopy portion 2332 are folded, that is, when the canopy 233 is fully folded, the canopy 233 is in the fully open state.

Unlike the previous embodiment, in this embodiment, as shown in FIGS. 6, 7, and 11 to 15, the first frame 2311 is connected to the first edge 2331a of the first canopy portion 2331, and the second frame 2312 is connected to the first edge 2332a of the second canopy portion 2332. When the canopy 233 is unfolded, as shown in FIGS. 6 and 7, the first frame 2311 and the second frame 2312 may be pivoted relative to each other to be away from each other until the first edge 2331a of the first canopy portion 2331 and the first edge 2332a of the second canopy portion 2332 are respectively engaged with the box body 210, for example, engaged at or below the upper edge of the box body 210, to completely shield the accommodating space 213. At this time, the first frame 2311 and the second frame 2312 are both in their respective first positions to form a substantially horizontal frame body and surround the peripheral wall 212 of the box body 210.

As shown in FIGS. 11 and 12, when it is necessary to open the canopy 233 to a partially covered state, one of the first frame 2311 and the second frame 2312 may be pivoted in a direction close to the other, thereby folding the canopy 233 (that is, the first canopy portion 2331 and the second canopy portion 2332) connected between the first frame 2311 and the second frame 2312 until the first frame 2311 and the second frame 2312 are substantially perpendicular to each other. That is, when the canopy 233 is in the partially covered state, one of the first frame 2311 and the second frame 2312 is in the first position, while the other of the first frame 2311 and the second frame 2312 is in the second position. As shown in FIG. 13, continuing to pivot one of the first frame 2311 and the second frame 2312 in a direction close to the other until both the first frame 2311 and the second frame 2312 are substantially horizontal and adjacent to each other, the canopy 233 (comprising the first canopy portion 2331 and the second canopy portion 2332) is fully folded, thereby completely exposing the accommodating space 213, that is, in the fully open state. At this time, the first frame 2311 and the second frame 2312 are on the same side of the box body 210, that is, one of the first frame 2311 and the second frame 2312 is in the first position, while the other of the first frame 2311 and the second frame 2312 is in the third position.

In addition, as shown in FIGS. 14 and 15, another fully open state is also shown, that is, both the first frame 2311 and the second frame 2312 are pivoted to their respective second positions, that is, both the first frame 2311 and the second frame 2312 are vertically placed relative to the box body 210, at this time, the accommodating space 213 of the box body 210 may be fully exposed.

As shown in FIG. 6, the carrier 200 may also include a connecting strap 234 and a fastener 235. The connecting strap 234 has a first end 2341 and a second end 2342, one of which is fixedly connected to the canopy 233. The fastener 235 comprises a female connector 2351 and a male connector 2352 that may be detachably connected to each other, which are respectively disposed on the other of the first end 2341 and the second end 2342 of the connecting strap 234 and the box body 210, for keeping the canopy 233 closed relative to the box body 210.

For example, in this embodiment, a connecting strap 234 and a corresponding fastener 235 are symmetrically disposed on two sides of the carrier 200 along a length direction D2. As shown in FIG. 6, as an example of the connecting strap 234 and the corresponding fastener 235 being close to the second canopy portion 2332, the first end 2341 of the connecting strap 234 may be fixedly connected to the second canopy portion 2332 by means such as stitching, the second end 2342 of the connecting strap 234 is provided with the female connector 2351, and the box body 210 is correspondingly provided with the male connector 2352. It can be understood that a connecting strap 234 and a corresponding fastener 235 may also be provided on the side of the box body 210 close to the first canopy portion 2331. When the canopy 233 is in the fully covered state, that is, both the first canopy portion 2331 and the second canopy portion 2332 are unfolded, the female connector 2351 and the male connector 2352 of the fastener 235 may be cooperated with each other to secure the first canopy portion 2331 and the second canopy portion 2332 relative to the box body 210, thereby preventing the first canopy portion 2331 and/or the second canopy portion 2332 from being detached (that is, separated from the box body 210) during the movement of the box body 210.

When it is necessary to fold the canopy 233, the user may open the fastener 235 on any one side or both sides and turn the canopy frame (that is, the first frame 2311 or the second frame 2312) on that side towards the other side, thereby folding the canopy 233, comprising but not limited to the partially covered state and the fully open state of the canopy 233.

In an example, the fastener 235 may employ a magnetic buckle structure, that is, the female connector 2351 and the male connector 2352 may be a female buckle and a male buckle that are cooperated with each other. However, the present disclosure is not limited thereto, and the fastener 235 may also be a zipper, a hook and loop fastener (e.g., Velcro), a snap button, a plug buckle, a hanging buckle, a hook buckle, and the like.

In addition, as shown in FIGS. 6 and 7, the box body 210 of this embodiment may also include a carrying handle 260, which may be disposed at the top side of the canopy 233, but the present disclosure is not limited thereto.

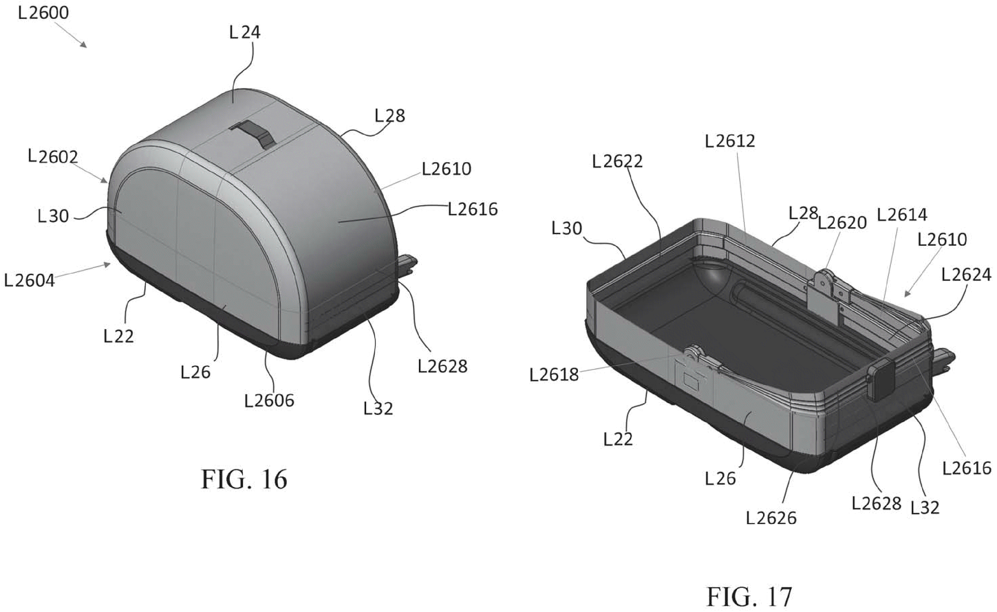

With reference now to FIGS. 16-21, another embodiment of a pet carrier L2600 is illustrated. As shown, the pet carrier L2600 has a front side, rear side, left side, right side, and a top formed by a first section L2602 and a second section L2604 in combination. The first section L2602 and the second section L2604 may but need not be separable.

The pet carrier L2600 may include a canopy unit L2610. The canopy unit L2610 includes a canopy frame L2612, a canopy bow L2614 movable relative to the canopy frame L2612, and a canopy L2616. The canopy bow L2614 may have a first positioning end L2618 and a second positioning end L2620 respectively mounted to the canopy frame L2612. The canopy bow L2614 may be rotatable relative to the canopy frame L2612 about a mounting axis extending through the first and second positioning ends L2618, L2620. In an embodiment, the canopy bow L2614 is mounted near a center of the front L26 and rear L28 of the pet carrier L2600, respectively, such that a first frame portion L2622 of the canopy frame L2612 is arranged at a first side of the mounting axis and a second frame portion L2624 of the canopy frame L2612 is arranged at a second, opposite side of the mounting axis. In the illustrated, non-limiting embodiment, the canopy bow L2614 is rotatable between a first position (FIG. 16) in which the canopy bow L2614 is positioned generally adjacent to and in vertical alignment with the first frame portion L2622 and a second position (FIG. 17) in which the canopy bow L2614 is positioned generally adjacent to and in vertical alignment with the second frame portion L2624. In an embodiment, the canopy bow L2614 is rotatable about 180 degrees between the first position and the second position. Further, it should be understood that the canopy bow L2614 may be arranged at and retained or held in one or more positions between the first position and the second position. Any suitable type of positioning mechanism may be employed to retain the canopy bow L2614 at any position along the path of rotation at or between the first position and the second position.

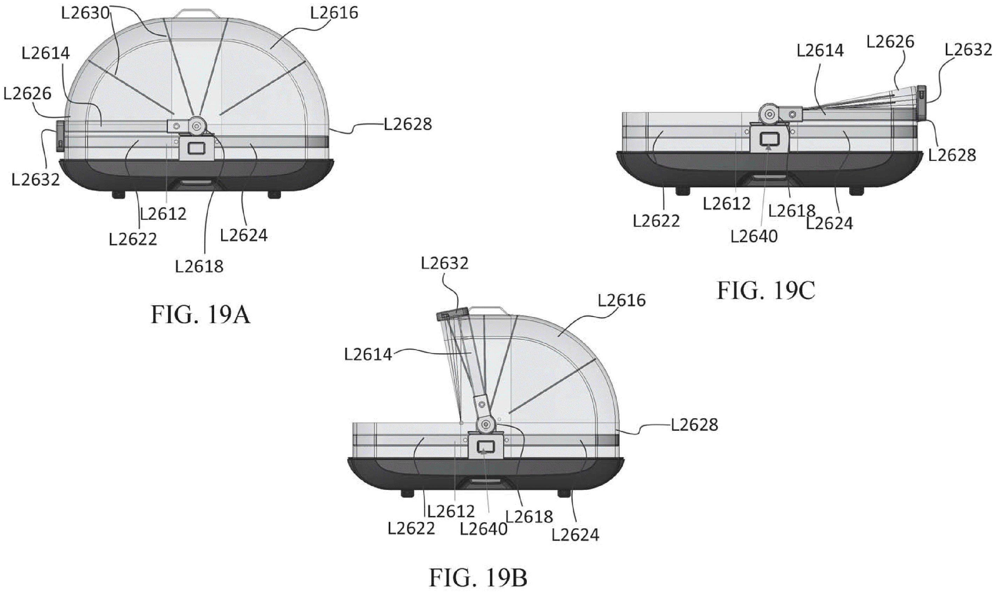

The canopy L2616 has a body including a first end L2626 and a second end L2628. In the illustrated, non-limiting embodiment, one or more structural supports or support bows L2630 are associated with the body of the canopy L2616, and in some embodiments integrated into the body of the canopy L2616. The structural supports L2630 may be rigid, semi-rigid, and/or resilient and are movable about the mounting axis in response to rotation of the canopy bow L2614. As shown, the first end L2626 of the canopy L2616 may be secured to the canopy bow L2614 and the second end L2628 of the canopy L2616 may be connected to the second frame portion L2624 of the canopy frame L2612. Accordingly, when the canopy bow L2614 is in the first position, the canopy L2616 extends from a position generally adjacent to the first frame portion L2622 to the second frame portion L2624 about the mounting axis. When the canopy bow L2614 is in the first position, the pet carrier L2600 may be considered to be in a closed configuration. Similarly, when the canopy bow L2614 is in the second position, the first end L2626 of the canopy L2616 is positioned generally adjacent to the second frame portion L2624 and the second end L2628 of the canopy L2616. When the canopy bow L2614 is in the second position, the pet carrier L2600 may be considered to be in a fully open configuration. When the canopy bow L2614 is positioned between the first position and the second position, such as shown in FIG 19B. for example, the pet carrier L2600 may be considered to be in a partially open position.

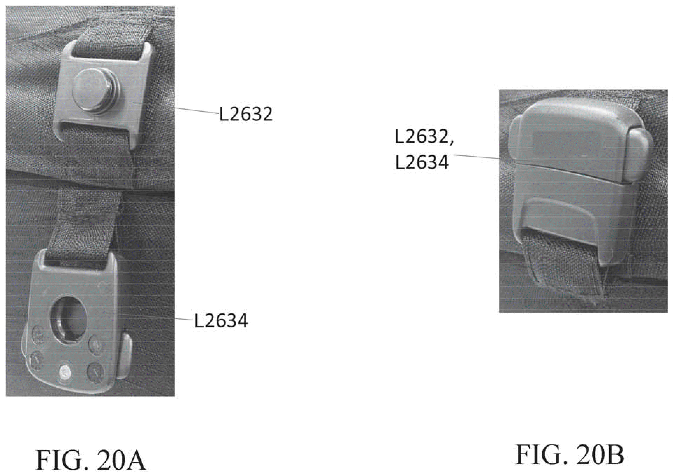

In an embodiment, the canopy bow L2614 may have a first portion L2632 of locking mechanism or other coupling device positioned thereat and a second portion L2634 of the locking mechanism or closure may be arranged at an the base L2606 for example (see FIG. 20A). The first portion L2632 of the locking mechanism is engageable with the second portion L2634of the locking mechanism (FIG. 20B) when the when the canopy bow L2614 is in the first position. This engagement is operable to retain the canopy bow L2614 in the first position. The locking mechanism formed by the first and second portions L2632, L2634 may provide a positive mechanical interlock and, in some embodiments, may be a magnetic latch. However, it will be appreciated that any suitable mechanism for coupling the canopy bow L2614 to an adjacent portion of the pet carrier L2600 is within the scope of the disclosure.

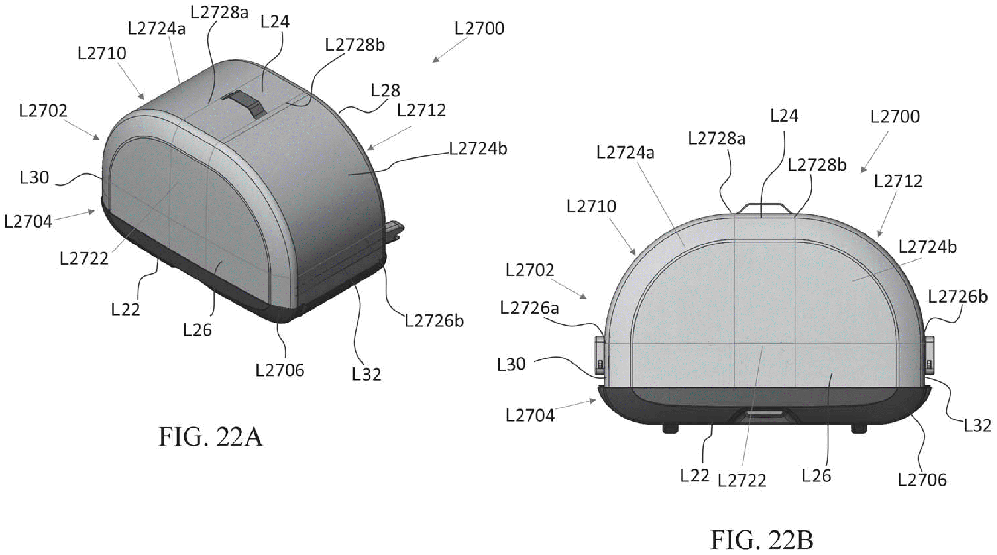

In other embodiments, the pet carrier may include a plurality or canopy units. For example, in the non-limiting embodiment of FIGS. 22A-26, the illustrated pet carrier L2700 includes a first canopy unit L2710 positioned adjacent to a first side of the pet carrier L2700, such as the left side L30 for example, and a second canopy unit L2712 positioned adjacent to a second, opposite side of the pet carrier L2700, such as the right side L32 for example. In such embodiments, each canopy unit L2710, L2712 includes a canopy bow L2714a, L2714b rotatable relative to a canopy frame L2716a, L2716b about a respective mounting axis. As shown, the mounting axes may be parallel to one another, arranged within the same plane, and separated from one another by a distance.

The mounting ends L2718a, L2718b, L2720a, L2720b of the canopy bow L2714a, L2714b of each canopy unit L2710 may similarly be mounted near a center of the front L26 and rear L28 of the pet carrier L2700. In the illustrated, non-limiting embodiment, the first canopy bow L2714a of the first canopy unit L2710 is rotatable between a first position in which the canopy bow L2714a is positioned generally adjacent to and in vertical alignment with the canopy frame L2716a and a second position in which the first canopy bow L2714a is arranged at a non-parallel angle relative to the canopy frame L2716a. In the illustrated, non-limiting embodiment, the second position of the first canopy bow L2714a is oriented substantially perpendicular to the first position. In such embodiments, the first canopy bow L2714a is rotatable about 90 degrees between the first position and the second position. However, embodiments where the second position is at another angle relative to the first position are also within the scope of the disclosure. Further, it should be understood that the first canopy bow L2714a may be arranged at and retained or held in one or more positions between the first position and the second position.

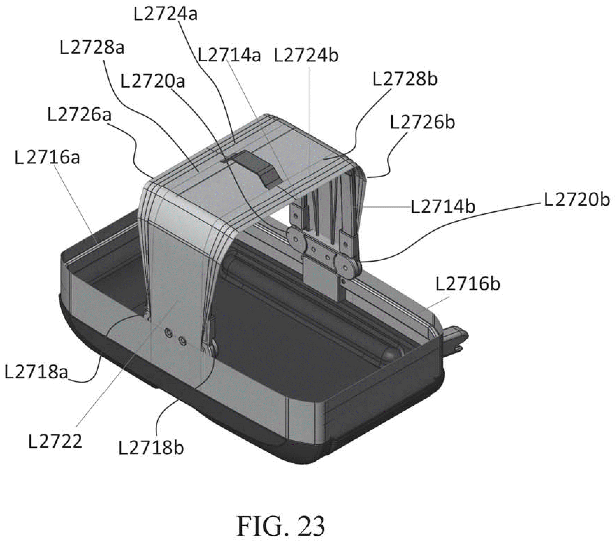

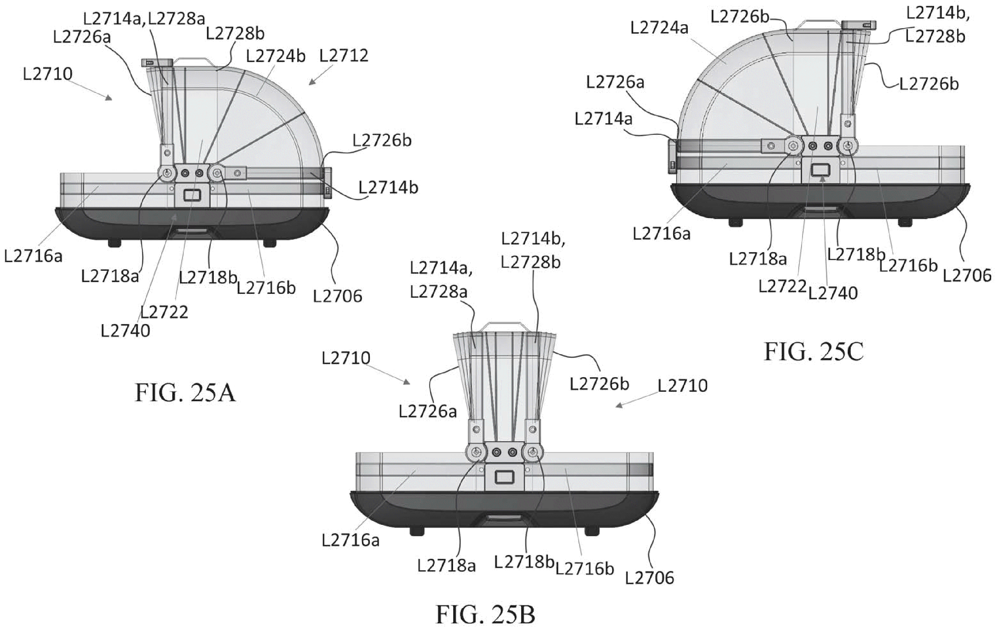

A center panel L2722 may be arranged between and coupled to the first canopy unit L2710 and the second canopy unit L2712, respectively. In an embodiment, the center panel L2722 is fixed relative to the pet carrier L2700 and the base L2706. The first canopy L2724a of the first canopy unit L2710 may have a first end L2726a connected to the first canopy bow L2714a and a second, opposite end L2728a connected to the center panel L2722, such as an edge thereof. Further, the first canopy L2710 may include one or more first structural supports or support bows L2730a operable to retain the shape of the first canopy unit L2710 when closed. When the first canopy bow L2714a is in the first position, the first canopy L2724a extends from a position generally adjacent to the canopy frame L2716a to the center panel L2722. When the first canopy bow L2714a is in the first position, the first canopy unit L2710 of the pet carrier L2700 may be considered to be in a closed configuration. Similarly, when the first canopy bow L2714a is in the second position, the first end L2726a of the first canopy L2724a is positioned generally adjacent to the center panel L2722, and therefore the second end L2728a of the first canopy L2724a. When the first canopy bow L2714a is in the second position (FIGS. 23, 25A), the first canopy unit L2710 of the pet carrier L2700 may be considered to be in a fully open configuration. When the first canopy bow L2714a is positioned at position between the first position and the second position, the first canopy L2724a of the pet carrier L2700 may be considered to be in a partially open position. In an embodiment, the center panel L2722 or the canopy may include a retention device (not shown) operable to retain the first canopy bow L2714a in the second position.

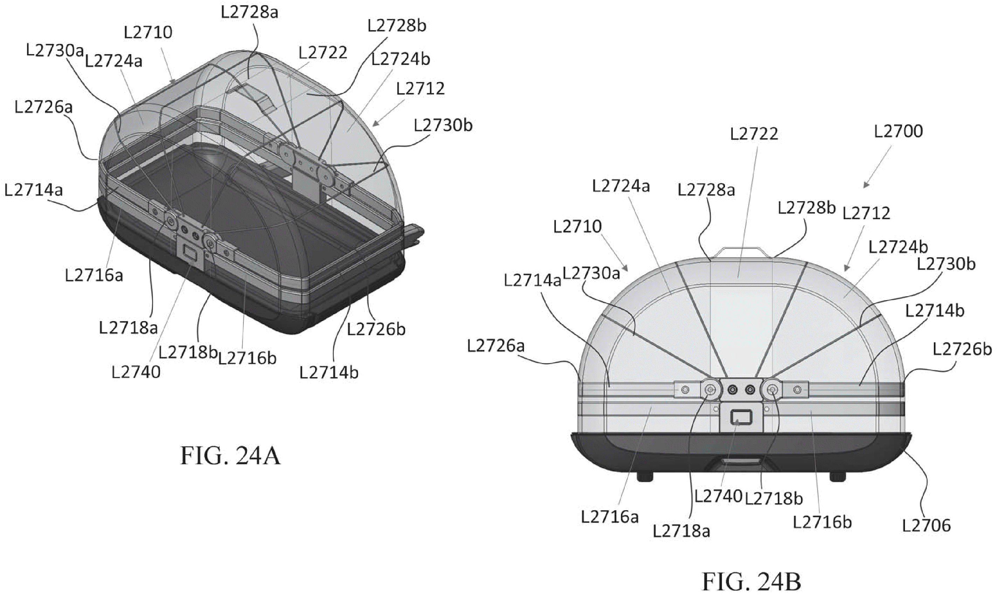

It should be understood that the second canopy unit L2712 may have a similar configuration to the first canopy unit L2710. A first end L2726b of the second canopy L2724b may be attached to the second canopy bow L2714b, and a second, opposite end L2728b of the second canopy L2724b may be connected to the center panel L2722. One or more second structural supports or support bows L2730b may be operable to support the intermediate portion of the second canopy L2724b. The second canopy bow L2714b may be movable from a first position arranged adjacent to the frame L2716b (FIG. 22A, 24A) and a second position (FIG. 23, 25B), adjacent to the center panel L2722. Operation of the second canopy unit L2712 is substantially similar to that of the first canopy unit L2710 and therefore is not described herein in further detail. In embodiments of the pet carrier L2700 including a first canopy unit L2710 and a second canopy unit L2712, a position of the first canopy L2724a may be adjusted independently of the second canopy L2724b.

Although described as a separate first canopy unit L2710 and second canopy unit L2712, it should be understood that in other embodiments, a single canopy unit is also within the scope of the present disclosure, the single canopy frame is formed by canopy frames L2716a and L2716b. The single canopy unit includes a first canopy bow L2714a (rotatable as described above) and a second canopy bow L2714b (rotatable as described above), and the first canopy bow L2714a and the second canopy bow L2714b are mounted at different positions around the single canopy frame. In such embodiments, the canopy unit may include two separate canopies L2724a, L2724b connected by a center panel L2722 as previously described, a single canopy L2724 having a first end L2726 connected to the first canopy bow L2714a and a second opposite end L2728 connected to the second canopy bow L2714b may be used. In such a configuration, center of the single canopy, disposed between the first and second canopy bows L2714a, L2714b will remain stationary relative to the base L2706.

Similar to the embodiment of FIGS. 16-21, each canopy bow L2714a, L2714b may have a first portion L2632a, L2632b of a locking mechanism or other coupling device positioned there at configured to cooperate with a second portion (not shown) arranged at an the base L2706 for example to retain the canopy L2724a, L2724b in a closed position.

In the embodiments illustrated and described herein, the one or more canopy units L2610, L2710, L2712 are integrated into both the first and second sections L2602, L2702, L2604, L2704 of the pet carriers L2600, L2700. For example, the canopy L2616, L2724a, L2724b and the canopy bow L2614, L2714a, L2714b in combination may form the first section L2602, L2702 of the pet carrier L2600, L2700 and the canopy frame L2612, L2716a, L2716b may be mounted to the base L2606, L2706 of the second section L2604, L2704. In the illustrated, non-limiting embodiment, the second section L2604, L2704 includes a sidewall L2607, L2707 protruding from the base. In an embodiment, the sidewall L2607, L2707, extends about an entire periphery of the base L2606, L2706. The canopy frame L2612, L2716a, L2716b may be arranged at the sidewall L2607, L2707. However, embodiments where the canopy frame L2612, L2716a, L2716b is also positioned at the first section L2602, L2702 of the pet carrier L2600, L2700 are also within the scope of the disclosure.

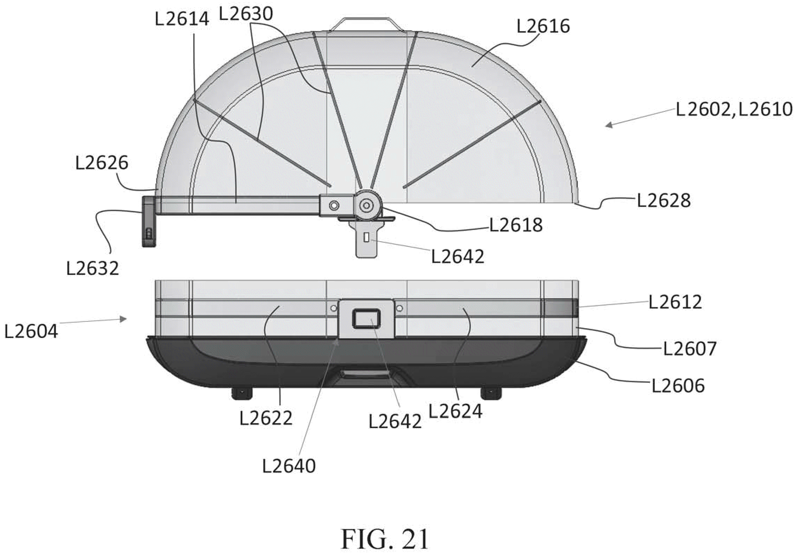

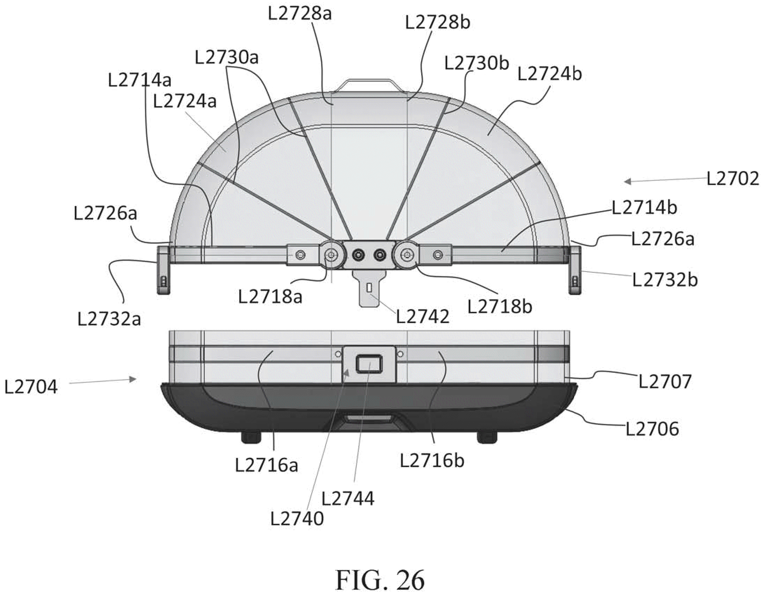

In an embodiment, the canopy L2616, L2724a, L2724b of each respective canopy unit L2610, L2710, L2712 is permanently coupled to the pet carrier L2600, L2700. However, in an embodiment, such as shown in FIGS. 21 and 26, the canopy L2616, L2724a, L2724b may be removably afsecured to the pet carrier L2600, L2700, such as via one or more connectors. In the illustrated, non-limiting embodiment, the connector L2640, L2740 includes a first portion L2642, L2742, such as a buckle, and a second portion L2644, L2744, such as a latch plate slidably receivable within the buckle L2642, L2742. Although the buckle L2642, L2742 is illustrated as being mounted at the second section L2604, L2704, such as the canopy frame L2612, L2716a, L2716b for example, and the latch plate L2644, L2744 is illustrated as extending from the first section L2602, L2702, such as from a positioning end of a canopy bow L2614, L2714a, L2714b for example, it should be understood that embodiments where the buckle L2642, L2742 is arranged at the first section L2602, L2702 and the latch plate L2644, L2744 is arranged at the second section L2604, L2704 are also contemplated herein. Further, the connector L2640, L2740 illustrated and described herein is intended as an example only, and any suitable connector operable to releasably couple the first and second sections is within the scope of the disclosure.

Various embodiments of the pet carrier L2600, L2700 also comprises at least one latch connector for engaging with corresponding seat anchors (not shown) of a vehicle seat (e.g., a car seat). In the non-limiting embodiment shown, for example, as shown in FIGS. 16 to 18B, the carrier L2600 has a plurality of latch connectors, comprising a first latch connector L70a and a second latch connector L70b. However, embodiments with only a single latch connector or more than two latch connectors are also contemplated herein. At least one latch connector L70a, L70b may be integrally formed with the carrier L2600. For example, at least one latch connector may be permanently connected to the carrier L2600. Alternatively, at least one latch connector may be removably connected to the carrier L2600.

In the non-limiting embodiment shown, at least one latch connector L70a, L70b is disposed at the base L2606, L2706 of the carrier L2600, L2700. It should be understood that embodiments where the latch connectors are disposed at another suitable location around the carrier L2600, L2700 are also within the scope of the present disclosure.

Additionally, although the latch connectors L70a, L70b are shown as being positioned adjacent to the rear side of the carrier L2600, L2700 in several embodiments, in other embodiments, one or more latch connectors L70a, L70b may be disposed on another side of the carrier L2600, such as on a right side, a left side, or a front side of the carrier L2600.

The latch connectors L70a, L70b may be switched between a closed or engaged configuration and an open or released configuration, for example via a release actuator. In the closed or engaged configuration, a latch member (not shown) of the latch connector L70a, L70b is closed or extended; and in the open or released configuration, the latch member of the latch connector L70a, L70b is opened or retracted (not shown), and thus may be separated from the seat anchor of the vehicle. Although not shown, in some embodiments, the release actuator is positioned directly at the latch connector L70a, L70b, and the user operates the release actuator of each latch connector to separate the carrier L2600, L2700 from the corresponding seat anchor. In some embodiments, the release actuator is disposed at a connection position of the handle and the canopy or at another location. The latch connectors L70a, L70b may be configured to protrude relative to the base L2606, L2706 to be in an extended position when in use, to engage with the corresponding seat anchor, and to retract into a cavity of the base L2606, L2706 to be in a retracted position when not in use.

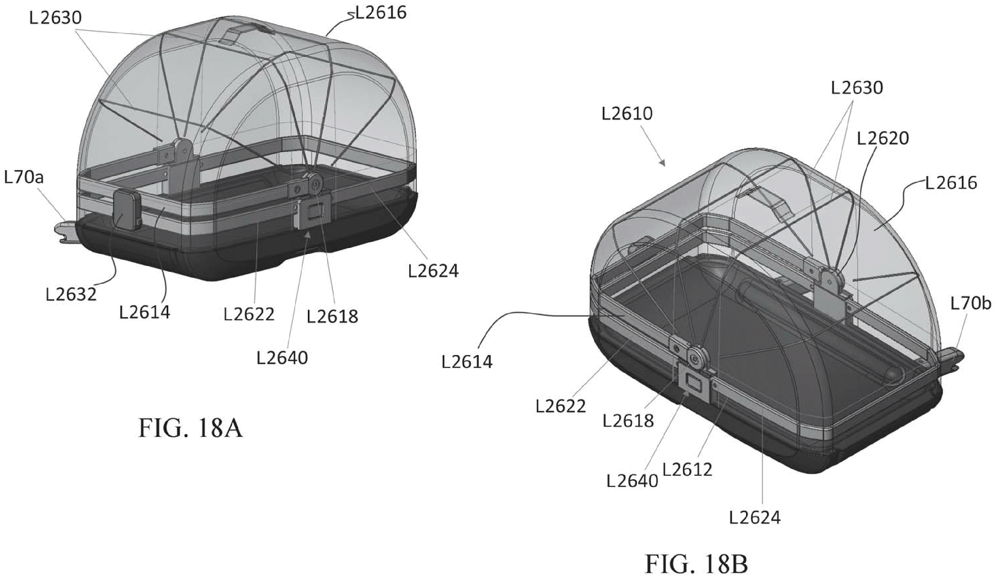

It should be noted that the carriers L2600, L2700 shown in FIGS. 16 to 17 and FIGS. 22A, 22B, and 23 are not processed in a see-through manner, while the canopy units L2610, L2710, L2712 and side walls L2607, L2707 of the carriers L2600, L2700 shown in FIGS. 18A to 19B, FIG. 21, and FIGS. 24A to 27 are processed in a see-through manner. As a result, the canopy frames L2612, L2716a, L2716b, the canopy bows L2614, the first canopy bow L2714a, the second canopy bow L2714b, and the structural supports or support bows L2630, L2730a, L2730b of the canopy units L2610, L2710, L2712 are shown in the see-through views.

It should be understood that, for the carrier L2600, as shown in FIGS. 16 and 17, the canopy frame L2612 (comprising the first frame portion L2622 and the second frame portion L2624) is positioned inside the carrier L2600, more specifically, the canopy frame L2612 is positioned on an inner side of the side wall L2607, the canopy frame L2612 is shield by the side wall L2607, and the canopy frame L2612 is lower than the upper edge of the side wall L2607. As shown in FIG. 21, the canopy bow L2614 is positioned on the inner side of the canopy L2616, and a part (hereinafter referred to as the extension) of the canopy bow L2614 extends downward beyond the edge of the canopy. Referring to FIGS. 18A to 18B and FIG. 19C, when the canopy bow L2614 is in the first position or the second position, the extension of the canopy bow L2614 is positioned on the inner side of the side wall L2607 and above the canopy frame L2612. Therefore, the canopy bow L2614 is positioned on the inner side of the canopy L2616 and the side wall L2607 and is shielded, and the first portion L2642 of the connector L2640 is also positioned inside the carrier L2600 and is shielded. The user may operate the first portion L2632 of the locking mechanism to move the canopy bow L2614 between the first position and the second position.

Correspondingly, for the carrier L2700, as shown in FIGS. 22A to 23, the canopy frames L2716a, L2716b are positioned inside the carrier L2700, more specifically, the canopy frames L2716a, L2716b are positioned on the inner side of the side wall L2707, the canopy frames L2716a, L2716b are shielded by the side wall L2707, and the canopy frames L2716a, L2716b are lower than the upper edge of the side wall L2707. As shown in FIGS. 24A and 24B, the first canopy bow L2714a and the second canopy bow L2714b are positioned on the inner side of the canopy L2724a, L2724b, and a part of the first canopy bow L2714a (hereinafter referred to as the first extension) and a part of the second canopy bow L2714b (hereinafter referred to as the second extension) extend downward beyond the edge of the canopy. Referring to FIGS. 24A to 24B, when the first canopy bow L2714a is in the first position, the first extension of the first canopy bow L2714a is positioned on the inner side of the side wall L2707 and above the canopy frame L2716a, and the first canopy bow L2714a is positioned on the inner side of the canopy L2724a and the side wall L2707 and is shielded; when the second canopy bow L2714b is in the first position, the second extension of the second canopy bow L2714b is positioned on the inner side of the side wall L2707 and above the canopy frame L2716b, and the second canopy bow L2714b is positioned on the inner side of the canopy L2724b and the side wall L2707 and is shielded. The first portion L2742 of the connector L2740 is also positioned inside the carrier L2700 and is shielded. The user may operate the first portion L2732a, L2732b of the locking mechanism to move the first canopy bow L2714a and the second canopy bow L2714b between the first position and the second position, respectively.

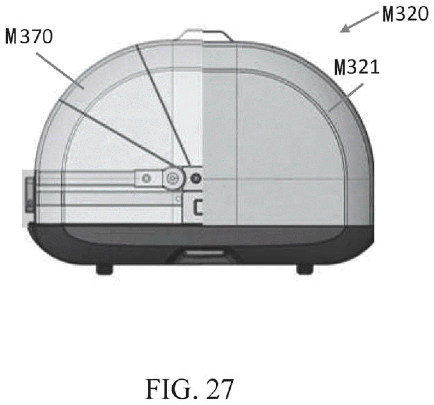

Referring to FIG. 27, another embodiment of a pet carrier M320 is shown. In this embodiment, most of the pet carrier M320 is structurally similar to the pet carriers of the previous embodiments with canopies. In this example, the canopy M370 is pivotable for only 90 degrees, opening about halfway compared to the canopy of the pet carrier. A closed side M321 of the carrier M320 is opposite to the canopy M370. In this embodiment, the closed side M321 is adjacent to a center panel having a handle. In this embodiment, the closed side M321 may have a window, a zippered door, or the like.

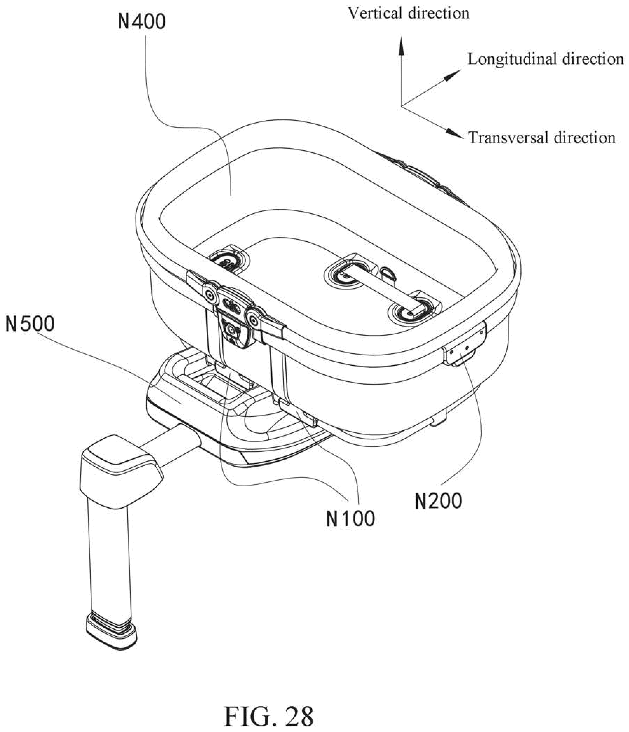

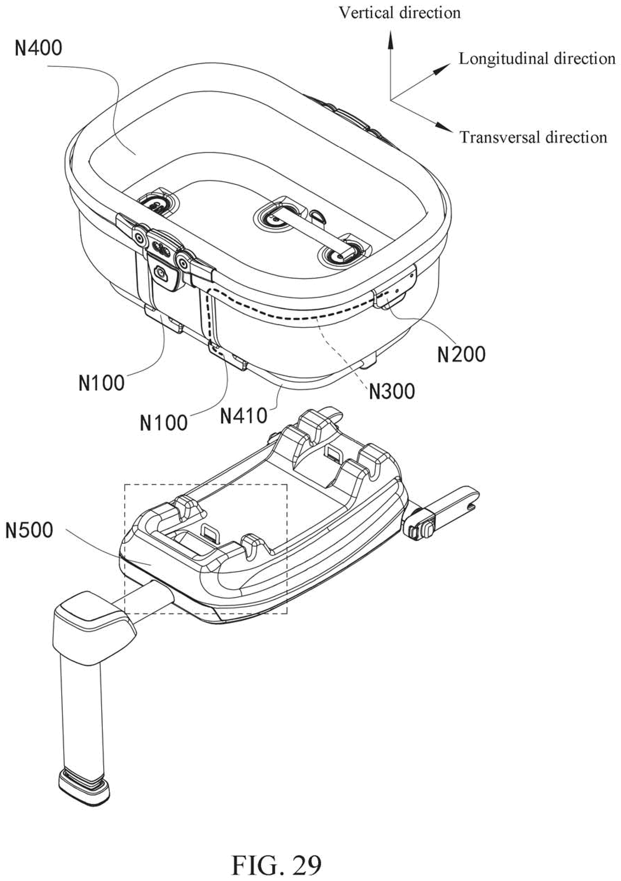

Referring to FIGS. 28 and 29, the carrier N400 according to the present disclosure is described as being applied to the base N500.

The carrier N400 is designed to carry pets. In this embodiment, the carrier N400 is a substantially rectangular bassinet. However, it should be understood that the carrier N400 may also be in other appropriate forms, as long as the engaging structure N100 and the unlocking structure N200 according to the present disclosure are disposed therein.

The carrier N400 is capable of being engaged above the base N500. The base N500 has a structure secured to a vehicle, so that the carrier N400 may be secured to the vehicle via the base N500. However, it should be understood that the form of the base N500 is not limited to this, as long as it may be engaged with the carrier N400.

The carrier N400 is provided with at least one engaging structure N100, at least one unlocking structure N200, and at least one connector N300. The engaging structure N100 may be switched between a locked state and an unlocked state such that the carrier N400 may be engaged with or disengaged from the base N500. The unlocking structure N200 is located at a different position on the carrier N400 from the engaging structure N100. The connector N300 is connected to the engaging structure N100 and the unlocking structure N200. The unlocking structure N200 may be operated to switch the engaging structure N100 to the unlocked state via the connector N300. The unlocking structure N200 may be operated to switch the engaging structure N100 to the unlocked state, which will be described in detail below.

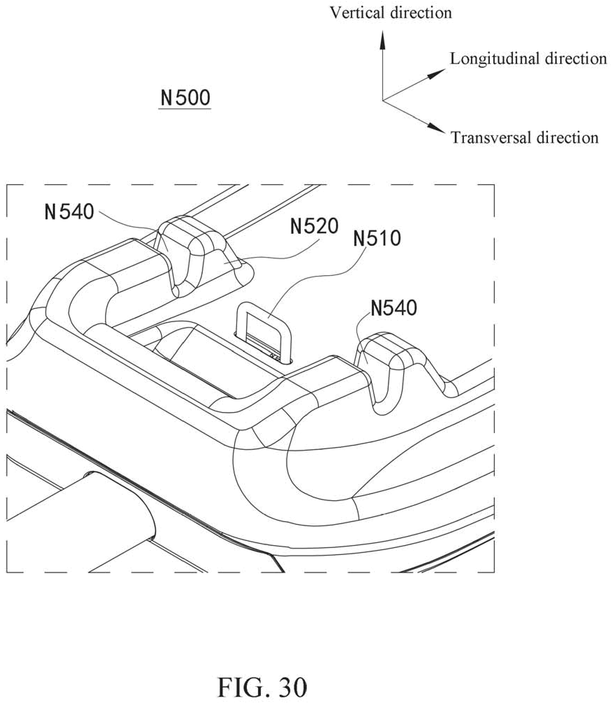

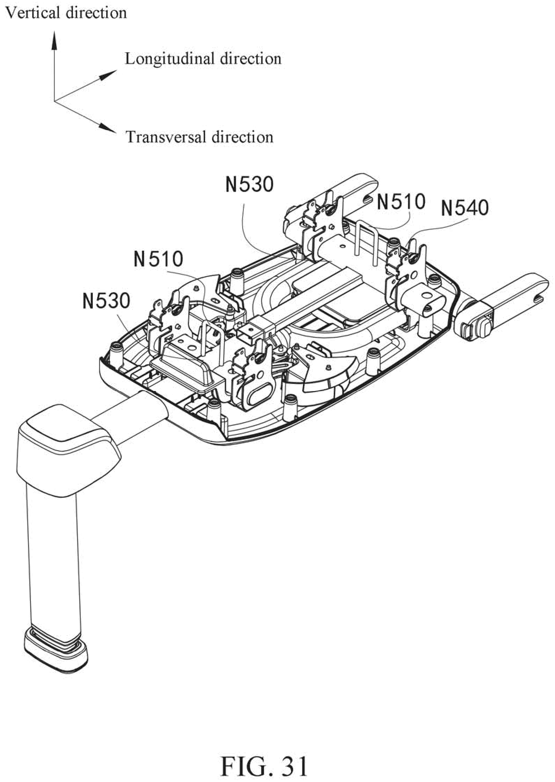

The specific structure of the base N500 is described with reference to FIGS. 30 and 31.

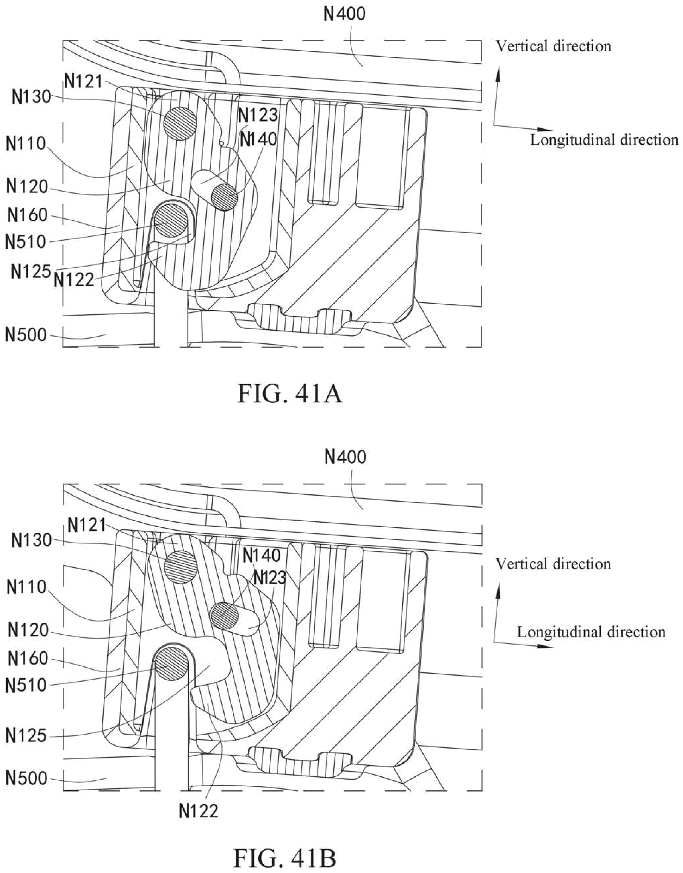

For the sake of description, a front-to-back direction of the base N500 herein is referred to as a longitudinal direction, a left-to-right direction of the base N500 is referred to as a transversal direction, and an up-and-down direction of the base N500 is referred to as a vertical direction. It should be understood that the vertical, longitudinal, and transversal directions do not have to be strictly vertical direction or horizontal direction but may have certain angles of inclination, and the vertical, longitudinal, and transversal directions do not have to be perpendicular to each other. The base N500 comprises at least one base rod N510 and an outer cover N520. The base rod N510 is connected and secured to a main tube N530 of the base N500, for example, by welding or by a snap-fit or other means, but the present disclosure is not limited thereto. In this embodiment, two base rods N510 are arranged along the longitudinal direction and are respectively secured to the main tube N530 to be stably engaged with the carrier N400. The engaging structure N100 comprises an engaging hook N120, which is connected to the base rod N510 when the carrier N400 is engaged with the base N500 (see FIG. 41A). The outer cover N520 covers a top surface of the base N500 and forms at least one base engaging groove N540. In this embodiment, the carrier N400 is provided with an engaging rod N410 at its bottom (see FIG. 29), and each base rod N510 is provided with a base engaging groove N540 on both sides in the transversal direction to accommodate the engaging rod N410 at the bottom of the carrier N400.

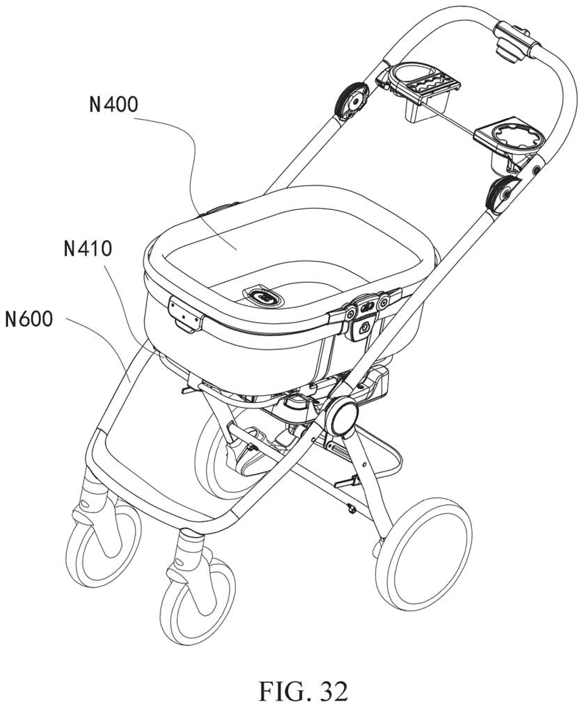

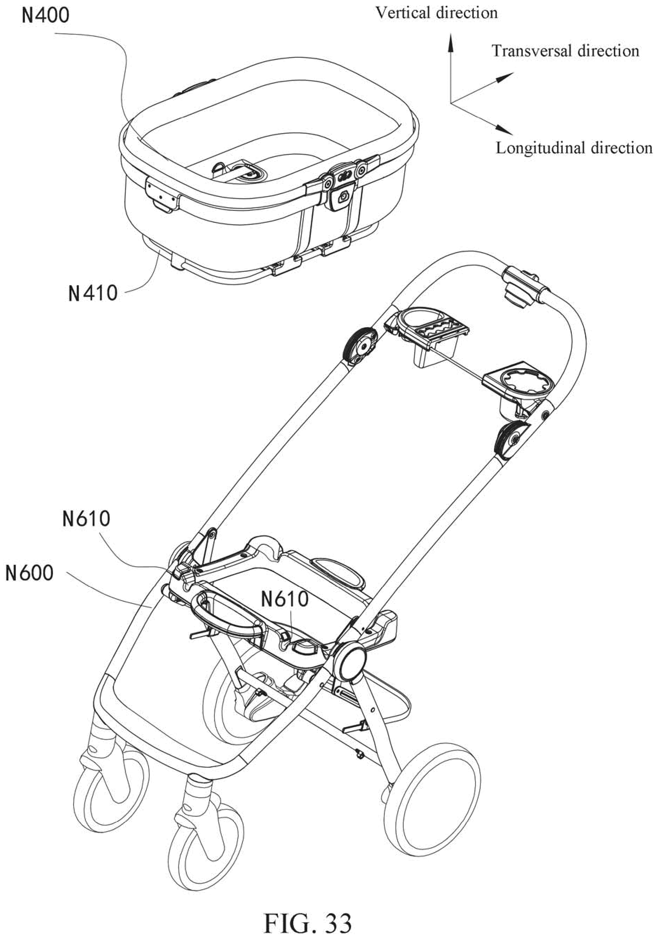

The carrier N400 according to the present disclosure is described as being applied to the cart N600 with reference to FIGS. 32 to 33.

The frame of the cart N600 may be provided with a cart engaging groove N610, which is similar to the base engaging groove N540 of the base N500. The engaging rod N410 of the carrier N400 may be engaged with the cart engaging groove N610, so that the carrier N400 and the cart N600 are integrated. In this embodiment, the cart N600 does not have components connected to the engaging structure N100. However, in other embodiments, the cart N600 may also be provided with components similar to the base rod N510 in order to be connected to the engaging structure N100.

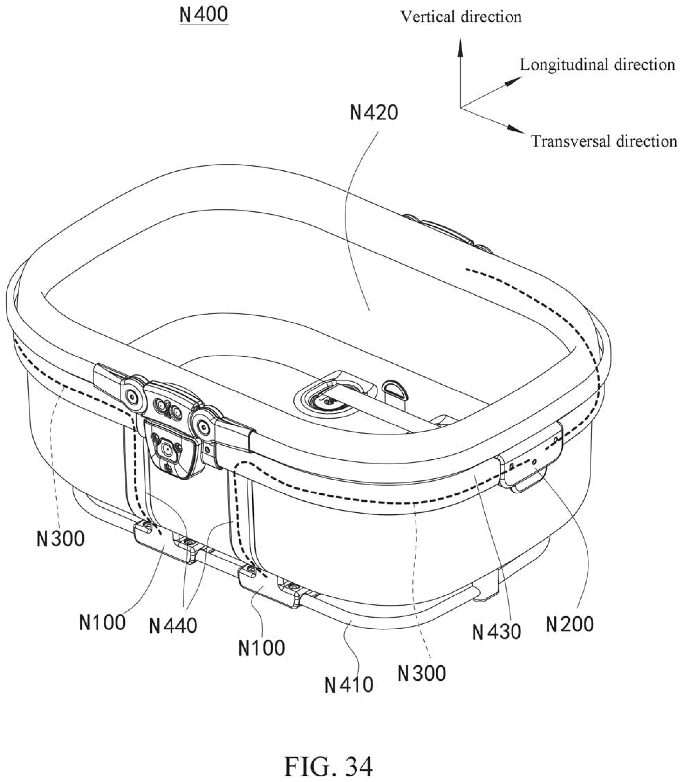

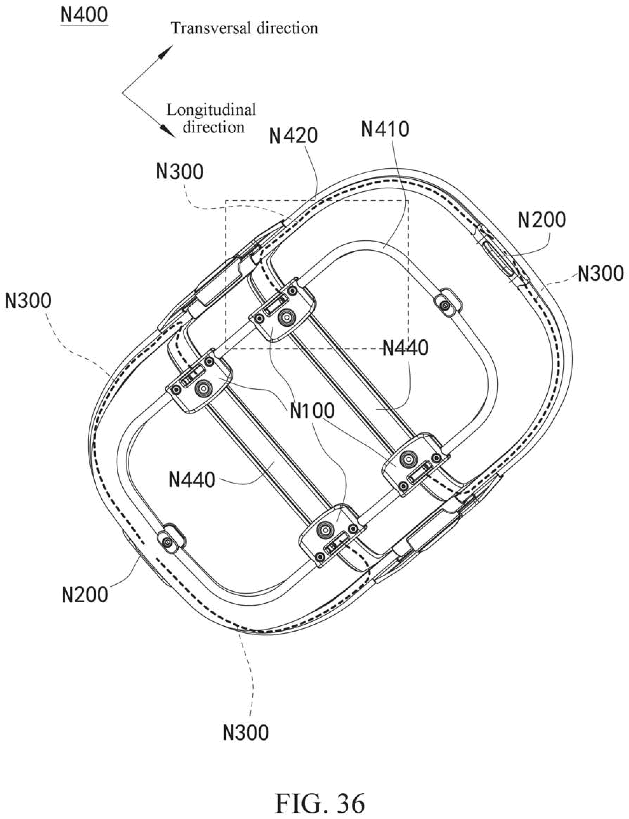

The carrier N400 according to the present disclosure is further described with reference to FIGS. 34 to 36.

In this embodiment, the carrier N400 comprises a box body N420, a first supporting tube N430, two second supporting tubes N440, and an engaging rod N410.

The box body N420 is substantially rectangular and has a top surface and a bottom surface that are opposite to each other. The first supporting tube N430 is positioned close to the top surface of the box body N420 and surrounds a periphery of the box body N420 to form a ring that extends along the transversal and longitudinal directions. The two second supporting tubes N440 are arranged in the transversal direction. Each second supporting tube N440 is U-shaped, connected to both sides of the first supporting tube N430, and encloses the bottom surface of the box body N420. Thus, the first supporting tube N430 and the second supporting tubes N440 form a frame that surrounds the box body N420.

The engaging rod N410 is disposed below the bottom surface of the box body N420 and forms a ring along the periphery of the box body N420. As described above, the engaging rod N410 may be engaged with the base engaging groove N540 of the base N500 to secure the carrier N400 to the base N500. The engaging structure N100 is disposed on the engaging rod N410 and may be engaged with the base rod N510 of the base N500 to be in a locked state.

More specifically, the engaging structure N100 is disposed below the bottom surface of the carrier N400 and close to a longitudinal side of the carrier N400, while the unlocking structure N200 is disposed on a transversal side of the carrier N400 and close to the top surface of the carrier N400. In this way, the unlocking structure N200 is in a position that is easy for the user to be observed and operated, thereby enhancing the user experience. In contrast, the unlocking structure N200 in the prior art is disposed near the engaging structure N100, and thus inevitably positioned at the bottom of the carrier N400 or disposed on the base N500. The user has to reach around the entire carrier N400 to access the unlocking structure N200, which is not convenient for the user to be observed and operated.

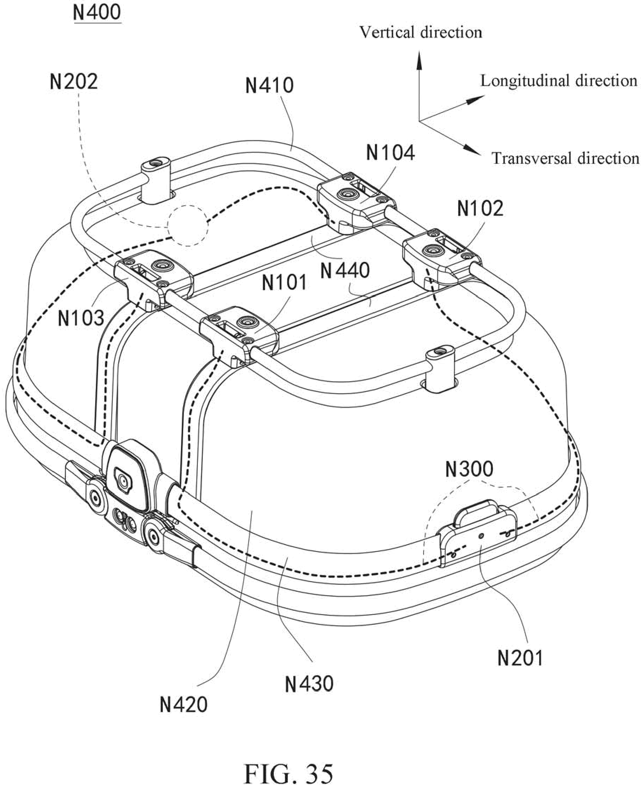

In the present disclosure, a single unlocking structure N200 may simultaneously control a plurality of engaging structures N100. Referring to FIG. 35, the engaging structure N100 comprises a first engaging structure N101 and a second engaging structure N102 that are symmetrically arranged in the longitudinal direction. The unlocking structure N200 comprises a first unlocking structure N201, which is respectively connected to the first engaging structure N101 and the second engaging structure N102 via two connectors N300, and may be operated to unlock the first engaging structure N101 and the second engaging structure N102 simultaneously. The specific structure of the unlocking structure N200 will be described in detail below.

In the present disclosure, the carrier N400 may include a plurality of engaging groups formed by the engaging structure N100 and the unlocking structure N200. Each engaging group comprises an engaging structure N100 and an unlocking structure N200 that are interrelated. Continuing to refer to FIG. 35, the first engaging structure N101, the second engaging structure N102, and the first unlocking structure N201 form one engaging group. In addition, the engaging structure N100 also comprises a third engaging structure N103 and a fourth engaging structure N104 that are symmetrically arranged in the longitudinal direction. The unlocking structure N200 comprises a second unlocking structure N202. The second unlocking structure N202 is respectively connected to the third engaging structure N103 and the fourth engaging structure N104 via two connectors N300, and may be operated to unlock the third engaging structure N103 and the fourth engaging structure N104 simultaneously. Therefore, the third engaging structure N103, the fourth engaging structure N104, and the second unlocking structure N202 form another engaging group. When the carrier N400 is engaged with the base N500, the engaging structure N100 in any one of the engaging groups may be connected to the engaging rod N410 of the base N500 (see FIG. 31). In this way, a plurality of engaging groups may provide a plurality of position options for engaging the carrier N400 with the base N500.

In this embodiment, the first engaging structure N101 and the second engaging structure N102 are positioned on one transversal side of the carrier N400, for example, the right side in FIG. 35, while the third engaging structure N103 and the fourth engaging structure N104 are positioned on the other transversal side of the carrier N400, for example, the left side in FIG. 35. Correspondingly, the first unlocking structure N201 is positioned at a center of one transversal side of the carrier N400, while the second unlocking structure N202 is positioned at a center of the other transversal side of the carrier N400. In other embodiments, the positions of the various engaging structures N100 may be flexibly provided according to the requirements.

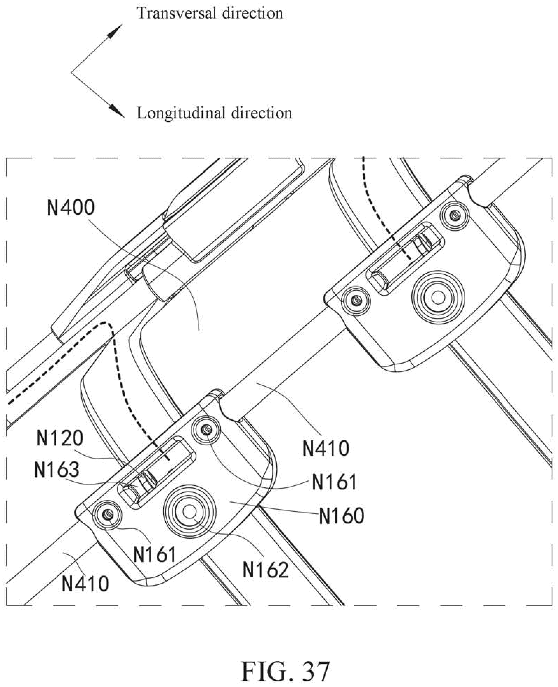

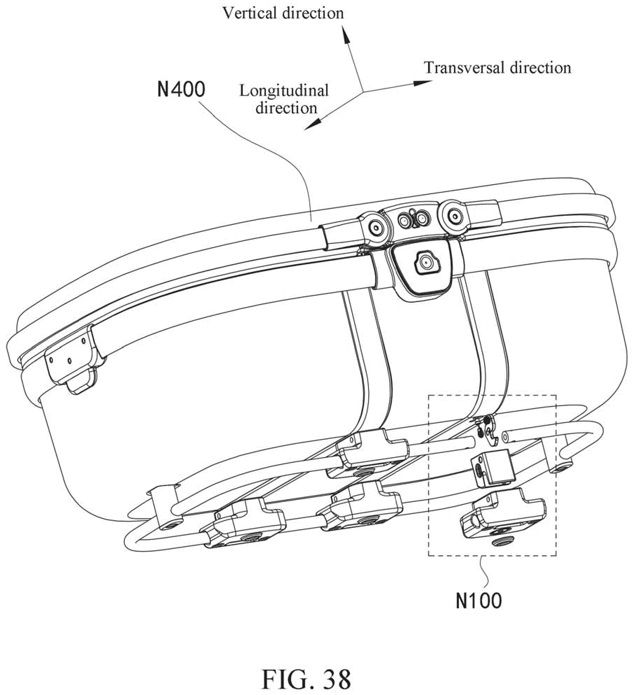

The engaging structure N100 is further specifically described with reference to FIGS. 37 to 39. The engaging structure N100 comprises: a mounting member N110, an engaging hook N120, a rotating shaft N130, a first pin N140 (the rotating shaft N130 and the first pin N140, see FIGS. 41A and 41B), a first elastic member N150, and a mounting base N160.

The mounting base N160 is mounted to the engaging rod N410 of the carrier N400 and at least partially accommodates the mounting member N110 therein. The mounting member N110 is inserted into the mounting base N160 and accommodates the engaging hook N120, the rotating shaft N130, the first pin N140 (see FIGS. 41A and 41B), and the first elastic member N150. More specifically, the mounting member N110 has a hollow structure, and the engaging hook N120 is accommodated in the mounting member N110.

The mounting member N110 comprises a rotating shaft hole N111, a guiding hole N112, and an engaging hole N113. The rotating shaft hole N111 penetrates through the mounting member N110 laterally, and the rotating shaft N130 of the engaging structure N100 (see FIGS. 41A and 41B) is disposed in the rotating shaft hole N111. The engaging hook N120 rotates around the rotating shaft N130, that is, the engaging hook N120 swings around a transversal axis. The first elastic member N150 is disposed around the rotating shaft N130. In this embodiment, the first elastic member N150 is a torsion spring with two ends respectively abutting against the inner walls of the mounting member N110 and the engaging hook N120, and is configured to bias the engaging hook N120 towards the locked position (which will be described in detail below). The guiding hole N112 penetrates through the mounting member N110 laterally and is an elongated hole extending in the vertical direction. The engaging hole N113 penetrates through the mounting member N110 laterally and is opened towards the bottom surface of the mounting member N110.

The engaging hook N120 comprises a pivoting end N121 and a hook portion N122 that are opposite to each other. The pivoting end N121 is pivotally connected to the mounting member N110 via the rotating shaft N130 (see FIGS. 41A and 41B). The hook portion N122 is capable of swinging around the pivoting end N121. The engaging hook N120 comprises a hook recess N125 that is opened outwardly between the hook portion N122 and the pivoting end N121. When the engaging hook N120 is in the locked state, the hook recess N125 may be locked onto the base rod N510 of the base N500 (see FIG. 41A) to prevent mutual movement between the carrier N400 and the base N500. A sliding slot N123 with continuous periphery is also formed between the hook portion N122 and the pivoting end N121, which is specifically an elongated slot extending diagonally. The first pin N140 is inserted into the sliding slot N123 and may be movable within the sliding slot N123. When the first pin N140 moves within the sliding slot N123, the engaging hook N120 may be driven to swing.

The mounting base N160 is sleeved over the outer side of the mounting member N110 and comprises: two mounting holes N161, an engaging groove N163, and a cushioning pad N162. The two mounting holes N161 are positioned on the two transversal sides of the mounting base N160. The engaging rod N410 is inserted into the mounting base N160 on the two transversal sides (specifically, through the side holes N164 at both sides), and two fasteners such as screws respectively pass through the two mounting holes N161 to secure the mounting base N160 to the engaging rod N410. The engaging groove N163 is positioned on the bottom surface of the mounting base N160. The engaging hole N113 of the mounting member N110 is communicated with the engaging groove N163 and faces the exterior of the engaging structure N100 through the engaging groove N163. The cushioning pad N162 is disposed on the bottom surface of the mounting base N160 such that the carrier N400 is smoothly placed on the ground or a table after it is disengaged from the base N500.

In this embodiment, the mounting member N110 and the mounting base N160 are two separate components that are assembled together. However, in other embodiments, the mounting member N110 and the mounting base N160 may be formed as a single integrated component.

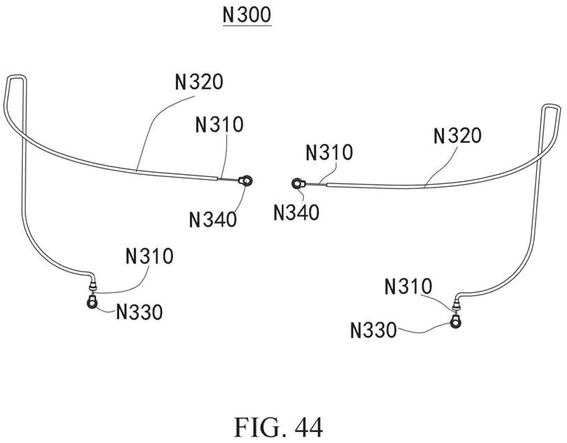

Additionally, in this embodiment, the connector N300 is a pulling wire, which comprises a cable N310, a cable sleeve N320, a first end N330, and a second end N340 (see FIG. 44). The cable sleeve N320 is embedded in the carrier N400, and the cable N310 is disposed in the cable sleeve N320 and connected to the first end N330 and the second end N340. Therefore, the movement of the first end N330 may be transmitted to the second end N340. In other embodiments, the connector N300 may also be an integrally formed elastic strip, which is not limited to the description in this embodiment.

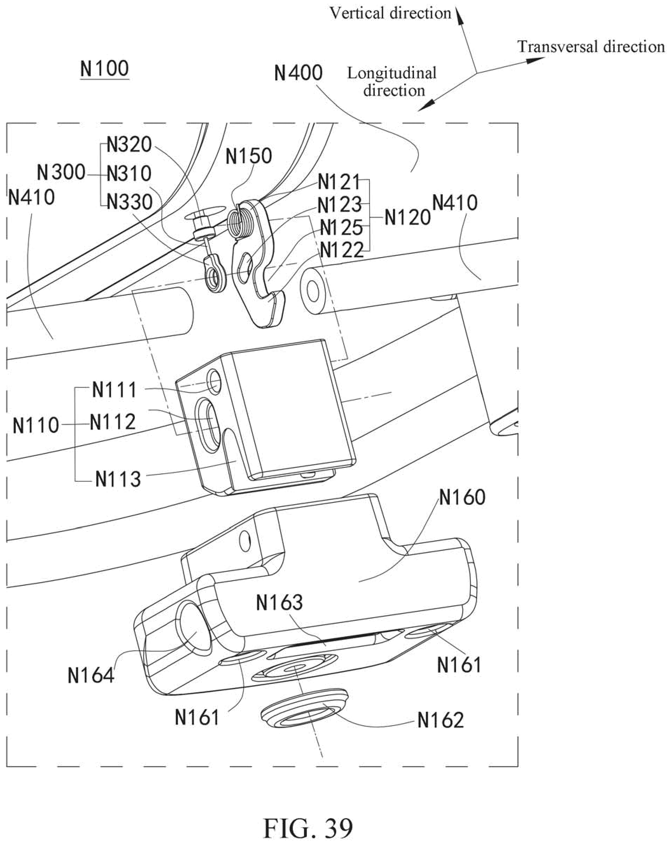

In conjunction with FIG. 39, the first end N330 of the cable N310 is connected to the engaging structure N100, and the first end N330 is sleeved over the first pin N140 to drive the first pin N140 to move linearly.

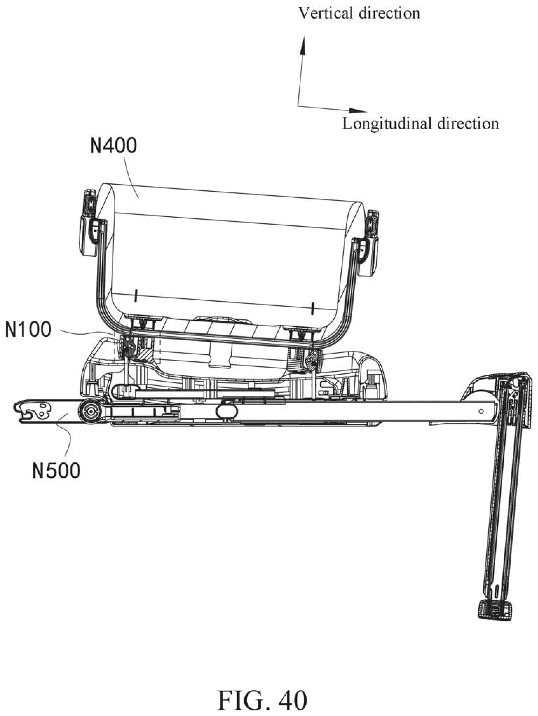

The specific structure and operation of the engaging structure N100 will be described with reference to FIGS. 40 to 41B.

The first pin N140 is disposed in the mounting member N110, specifically in the guiding hole N112 of the mounting member N110 (see FIG. 39) in a linear movement manner to move along the guiding hole N112. The first pin N140 is inserted into the sliding slot N123 of the engaging hook N120, so that the linear movement of the first pin N140 drives the engaging hook N120 to swing between the locked position (FIG. 41A) and the unlocked position (FIG. 41B).

FIG. 41A shows that the carrier N400 is engaged with the base N500, and the engaging structure N100 is in the locked state. At this time, the base rod N510 of the base N500 is accommodated in the engaging hole N113, and when the engaging hook N120 is in the locked state, the hook recess N125 of the engaging hook N120 corresponds to the position of the engaging hole N113 to be engaged with the base rod N510.

When the engaging structure N100 is required to be unlocked by the user, the connector N300 is pulled by the unlocking structure N200 to cause the first end N330 of the connector N300 to drive the first pin N140 to move linearly relative to the mounting member N110, specifically move upward in the vertical direction. At this time, the first pin N140 drives the engaging hook N120 to rotate upward (rotating counterclockwise in FIGS. 41A and 41B), while the first pin N140 slides along the sliding slot N123, so that the hook recess N125 of the engaging hook N120 is disengaged from the base rod N510. Therefore, the engaging structure N100 reaches the unlocked state shown in FIG. 41B, and the carrier N400 may be disengaged from the base N500.

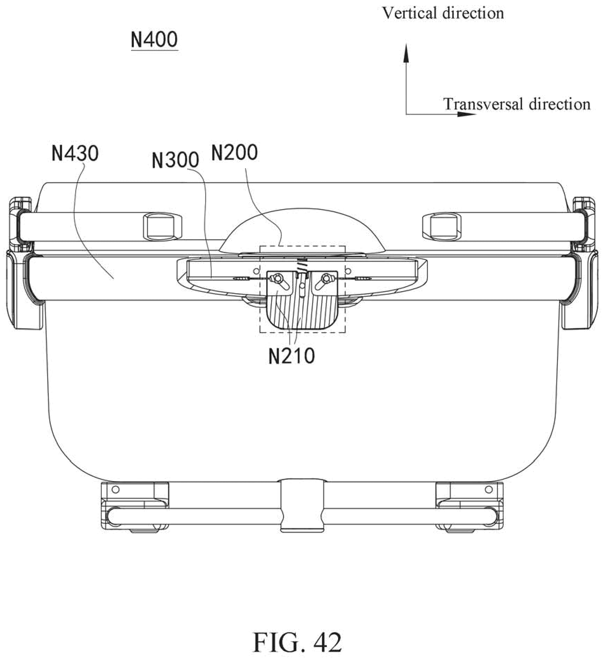

The specific structure of the unlocking structure N200 is described with reference to FIGS. 42 to 43B. The unlocking structure N200 comprises: an operating member N210, a second pin N220, a third pin N240, and a second elastic member N230.

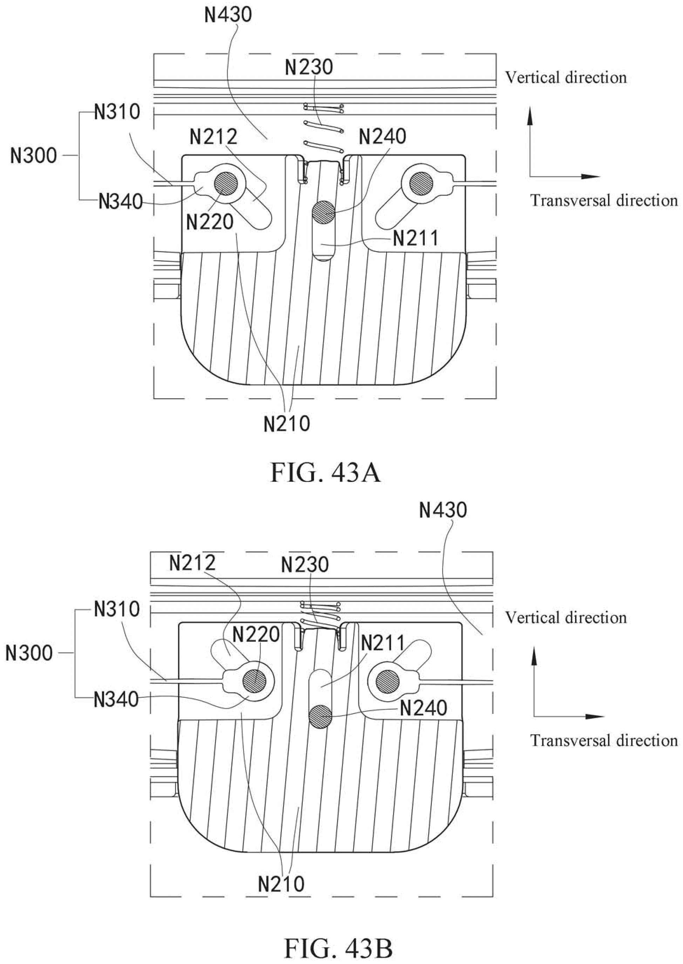

The operating member N210 is configured in a form of a block-shaped handle, which may be operated from the exterior of the carrier N400 to move between the initial state (FIG. 43A) and the pressed state (FIG. 43B) in the vertical direction. The operating member N210 is provided with an operating member slot N211 extending vertically and at least one inclined slot N212 extending diagonally.

The second pin N220 is disposed in the unlocking structure N200 in a linear movement manner (specifically, to move horizontally) and is inserted into the inclined slot N212 of the operating member N210 to convert the vertical movement of the operating member N210 into the horizontal movement of the second end N340 of the connector N300. A first supporting tube N430 may be provided with a horizontally extending sliding slot (not shown) to guide the horizontal movement of the second pin N220. The third pin N240 is secured to the carrier N400 and is inserted into the operating member slot N211 of the operating member N210 to guide the vertical movement of the operating member N210. The second end N340 of the connector N300 is sleeved over the second pin N220. In this way, when the operating member N210 moves to the pressed state, the inclined slot N212 of the operating member N210 drives the second pin N220 to move linearly to pull the second end N340 of the connector N300, thereby causing the first end N330 of the connector N300 to drive the engaging structure N100 to move to the unlocked state.

The two second pins N220 may be respectively inserted into two inclined slots N212 on the two longitudinal sides of the operating member N210 and connected to the second ends N340 of two connectors N300. Therefore, the operating member N210 may simultaneously drive two connectors N300, so that the two engaging structures N100 may be simultaneously unlocked by one unlocking structure N200.

The second elastic member N230 biases the operating member N210 towards the initial state, so that the operating member N210 is in the initial state without external force. More specifically, the second elastic member N230 is a helical spring, one end of which abuts against the inner wall of the first supporting tube N430 of the box body N420, and the other end of which abuts against the top surface of the operating member N210, to bias the operating member N210 downward towards the initial state.

As described above, the present disclosure provides a carrier that has an engaging structure and an unlocking structure, which are positioned at different locations on the carrier. In addition, the specific structure of the carrier of the present disclosure is conducive to the stability of its force, and can prevent deformation and overturning of the carrier.

Unless otherwise defined, all terms (comprising technical and scientific terms) used herein have the same meaning as commonly understood by one of ordinary skill in the art to which this disclosure belongs. It will be further understood that terms, such as those defined in commonly used dictionaries, may be interpreted as having a meaning that is consistent with their meaning in the context of the relevant art and will not be interpreted in an idealized or overly formal sense unless expressly so defined herein.

It should be understood that, although specific embodiments have been shown and described above, the present disclosure is not limited to the specific embodiments described above. Various modifications and variations may be made by the person skilled in the art without departing from the spirit and scope of the appended claims. Therefore, it should be noted that various modifications and variations should not be considered as being beyond the technical spirit and scope of the present disclosure.

## Claims

1. A carrier, **characterized in that** the carrier comprises:
a box body having an accommodating space; and
a canopy assembly pivotally connected to the box body or a bracket device surrounding the box body, with a pivotal connection position located below an upper edge of the box body, and the canopy assembly covers above the box body to shield the accommodating space.

2. The carrier according to claim 1, **characterized in that** the canopy assembly comprises:
a canopy; and
a canopy frame connected to the canopy to support the canopy,
wherein the canopy frame is pivotally connected to the box body or the bracket device to enable the canopy to be unfolded or folded relative to the box body.

3. The carrier according to claim 2, **characterized in that** the canopy comprises a first canopy portion and a second canopy portion,
the first canopy portion has a first edge and a second edge, wherein the first edge is an edge that is engaged with a periphery of the box body when the first canopy portion is unfolded, and the second edge is an edge that is away from the box body when the first canopy portion is unfolded; and
the second canopy portion has a first edge and a second edge, wherein the first edge is an edge that is engaged with a periphery of the box body when the second canopy portion is unfolded, and the second edge is an edge that is away from the box body when the second canopy portion is unfolded.

4. The carrier according to claim 3, **characterized in that**
when the first canopy portion is unfolded, the first edge and the second edge of the first canopy portion are substantially perpendicular to each other; and
when the second canopy portion is unfolded, the first edge and the second edge of the second canopy portion are substantially perpendicular to each other.

5. The carrier according to claim 3, **characterized in that**
when both the first canopy portion and the second canopy portion are unfolded, the second edge of the first canopy portion and the second edge of the second canopy portion are engaged with each other to form an entire canopy.

6. The carrier according to any one of claims 3 to 5, **characterized in that**
the canopy frame comprises a first frame and a second frame, the first frame and the second frame are respectively pivotably connected to the box body or the bracket device, and are pivotable relative to each other to be close to or away from each other;
the first frame is connected to one of the first edge and the second edge of the first canopy portion, and the second frame is connected to one of the first edge and the second edge of the second canopy portion, to enable the first canopy portion and the second canopy portion to be opened or closed relative to the box body.

7. The carrier according to claim 6, **characterized in that**
the first frame is connected to the second edge of the first canopy portion, and the second frame is connected to the second edge of the second canopy portion,
when the canopy is unfolded, the first frame and the second frame are pivoted relative to each other to be close to each other, to enable the first canopy portion and the second canopy portion to be engaged with each other to completely shield the accommodating space; and
when the canopy is fully folded, the first frame and the second frame are pivoted relative to each other to be away from each other, to enable the first canopy portion and the second canopy portion to be folded.

8. The carrier according to claim 6, **characterized in that** the first frame is connected to the first edge of the first canopy portion, and the second frame is connected to the first edge of the second canopy portion,
when the canopy is unfolded, the first frame and the second frame are pivoted relative to each other to be away from each other, to enable the first edge of the first canopy portion and the first edge of the second canopy portion to be respectively engaged with the box body to completely shield the accommodating space; and
when the canopy is fully folded, the first frame and the second frame are pivoted relative to each other to be close to each other, to enable the first canopy portion and the second canopy portion to be folded.

9. The carrier according to claim 8, **characterized in that**
when the canopy is unfolded, the first frame and the second frame form a substantially horizontal frame body; and
when the canopy is fully folded, the first frame and the second frame are placed adjacent to each other in a substantially horizontal manner.

10. A carrier, **characterized in that** the carrier comprises:
at least one engaging structure capable of being converted between a locked state and an unlocked state;
at least one unlocking structure located at a different position on the carrier from the engaging structure; and
at least one connector connected to the engaging structure and the unlocking structure, the unlocking structure capable of being operated to convert the engaging structure to the unlocked state through the connector.

11. The carrier according to claim 1, **characterized in that**
the carrier is capable of being engaged with a base, the engaging structure is capable of being engaged with a base rod of the base to be in the locked state.

12. The carrier according to claim 11, **characterized in that**
the carrier has an engaging rod at a bottom, the engaging rod forms an annular shape along a peripheral side of the carrier; and
the engaging rod is configured to be engaged with a base engaging groove of the base to secure the carrier to the base.

13. The carrier according to claim 12, **characterized in that**
the engaging structure comprises a mounting base, the mounting base is installed on the engaging rod;
two mounting holes are respectively disposed at two lateral sides of the mounting base, and the engaging rod is inserted into each of the mounting holes at the two lateral sides to be secured.

14. The carrier according to claim 11, **characterized in that** the carrier comprises:
a box body;
a first supporting tube close to a top surface of the box body and surrounding the peripheral side of the box body;
two second supporting tubes arranged laterally along the box body, each of the second supporting tubes being U-shaped, connected to both sides of the first supporting tube and enclosing a bottom surface of the box body.

15. The carrier according to claim 14, **characterized in that**
the engaging structure is disposed below the second supporting tube;
the unlocking structure is disposed at an outer side of the first supporting tube; and
the connector extends along an interior of each of the first supporting tube and the second supporting tube.

16. The carrier according to claim 11, **characterized in that** the engaging structure comprises:
a mounting member;
an engaging hook pivotally connected to the mounting member;
a first pin linearly and movably disposed in the mounting member and inserted into a sliding slot of the engaging hook, such that linear movement of the first pin causes the engaging hook to swing between a locked position and an unlocked position; and
a first elastic member biasing the engaging hook towards the locked position.

17. The carrier according to claim 16, **characterized in that**
the mounting member is in a hollow structure, the engaging hook is accommodated in the mounting member, and the mounting member comprises:
a rotating shaft hole penetrating through the mounting member laterally, the engaging structure comprising a rotating shaft disposed in the rotating shaft hole, the engaging hook rotating around the rotating shaft, and the first elastic member being disposed around the rotating shaft;
a guiding hole penetrating through the mounting member laterally and being an elongated hole extending vertically, the first pin being disposed in the guiding hole; and
an engaging hole penetrating through the mounting member laterally and opening towards a bottom surface of the mounting member, the base rod of the base being accommodated in the engaging hole;
wherein the engaging hook is provided with a hook recess engaged with the base rod, when the engaging hook is engaged with the base rod to be in the locked position, the hook recess corresponds to a position of the engaging hole.

18. The carrier according to claim 16, **characterized in that**
the connector comprises a first end connected to the engaging structure, the first end is sleeved on the first pin to drive the first pin to move linearly.

19. The carrier according to any one of claims 16, **characterized in that** the unlocking structure comprises:
an operating member capable of being operated from an outside of the carrier to move vertically between an initial state and a pressed state, wherein when the operating member moves to the pressed state, it moves the engaging hook to the unlocked position through the connector, and the operating member is provided with an operating member slot extending vertically;
a third pin secured to the carrier and inserted into the operating member slot to guide the operating member to move vertically; and
a second elastic member biasing the operating member towards the initial state.

20. The carrier according to claim 19, **characterized in that** the unlocking structure further comprises:
at least one second pin linearly and movably disposed in the unlocking structure, the operating member having at least one inclined slot extending obliquely, the second pin being respectively inserted into the inclined slot;
wherein the connector comprises a second end connected to the unlocking structure, the second end is sleeved on the second pin;
wherein when the operating member moves to the pressed state, the inclined slot of the operating member drives the second pin to move linearly to pull the connector.
